# EUROPEAN PATENT APPLICATION

(11) **EP 3 666 630 A1**
(43) Date of publication of application: **17.06.2020**
(21) Application number: 18872185.6
(22) Date of filing: 11.09.2018
(51) Int. Cl.: B62J 27/00, B62K 23/04

(54) **SADDLED VEHICLE**

(30) Priority: 02.11.2017 JP 2017212769
(71) Applicant: Yamaha Hatsudoki Kabushiki Kaisha, Iwata-shi, Shizuoka 438-8501 (JP)
(72) Inventor: HARA, Nobuo, Iwata-shi Shizuoka 438-8501 (JP); MASUDA, Tomoyoshi, Iwata-shi Shizuoka 438-8501 (JP); FUKUHARA, Yukihide, Iwata-shi Shizuoka 438-8501 (JP); KANEHARA, Masatomo, Iwata-shi Shizuoka 438-8501 (JP); TSUBOI, Hidekazu, Iwata-shi Shizuoka 438-8501 (JP)
(74) Representative: Stöckeler, Ferdinand
(86) International application number: PCT/JP2018/033722
(87) International publication number: WO 2019/087579

(57) **Abstract**

This invention provides a straddled vehicle that imparts tactile stimulation to a rider by adopting a technical concept that is different from a technical concept of imparting tactile stimulation by vibration of a general vibrator. A straddled vehicle according to this invention includes a steerable wheel and a tactile stimulation actuator. The steerable wheel is supported by a vehicle body frame so as to be rotatable around a wheel axle. The steerable wheel is steered leftward by a rider rotating a bar handle counterclockwise as viewed in downward direction, and is steered rightward by the rider rotating the bar handle clockwise as viewed in downward direction. The tactile stimulation actuator communicates information to the rider by imparting a frontward or backward pressure to the left hand or right hand of the rider as a tactile stimulation.

## Description

### TECHNICAL FIELD

The present teaching relates to a straddled vehicle that includes a bar handle.

### BACKGROUND ART

For example, Japanese Patent No. 5972332 (Patent Literature 1) discloses a motorcycle in which a general vibrator is disposed in a handle and a fuel tank. The motorcycle disclosed in Patent Literature 1 notifies a rider that the motorcycle is approaching an obstacle by causing the general vibrator to vibrate.

### CITATION LIST

### PATENT LITERATURE

Patent Literature 1: Japanese Patent No. 5972332

### SUMMARY OF INVENTION

### TECHNICAL PROBLEM

An object of the invention of the present application is to provide a straddled vehicle that imparts tactile stimulation to a rider by adopting a technical concept that is different from a technical concept of imparting tactile stimulation by vibration of a general vibrator.

### SOLUTION TO PROBLEM, AND ADVANTAGEOUS EFFECTS OF INVENTION

The aforementioned conventional technology includes a straddled vehicle in which a general vibrator is disposed in a handle. When the inventors of the present application examined the aforementioned straddled vehicle, the inventors of the present application found that in some cases it is difficult for a rider to become aware of vibrations produced by the general vibrator.

While a straddled vehicle is travelling, in some cases the bar handle vibrates due to vibrations received from a drive source such as an engine or an electric motor or vibrations from the road surface. In a straddled vehicle, in many cases the drive source constitutes one part of the frame, or the drive source is securely fixed to the frame. Furthermore, the vehicle weight of a straddled vehicle is light. Therefore, in a straddled vehicle, the bar handle is liable to vibrate. Consequently, even when a vibrator is provided, it has been difficult for a rider to become aware of vibrations produced by the vibrator.

Therefore, the inventors of the present application investigated ways to impart a tactile stimulation to a rider in a straddled vehicle in which the bar handle is liable to vibrate, by adopting a technical concept that is different from the technical concept of imparting a tactile stimulation by vibration of a vibrator.

Note that, in the present specification, the term "bar handle" refers to a handle bar-type steering apparatus. Accordingly, the term "bar handle" includes both a handle of a type in which grips are provided at both ends of a single bar-shaped member, and a handle of a type in which a handle on which a left grip is provided and a handle on which a right grip is provided are constituted by separate members.

The inventors of the present application focused their attention on the bar handle of the straddled vehicle and the movements of the hands of the rider. Therefore, the inventors of the present application examined in detail the relation between the bar handle and the hands of the rider. The bar handle of a straddled vehicle can be rotated about a steering axis extending in the up-down direction. The rider rotates the bar handle by imparting a force in the front-back direction to the bar handle. Further, the rider becomes aware of information from the road surface by means of a force in the front-back direction that is imparted to the hands of the rider from the bar handle. For example, when the vehicle body frame of the straddled vehicle leans in the leftward direction with respect to the road surface, the left grip of the bar handle pushes the left hand of the rider backward. The rider controls turning of the straddled vehicle by adjusting the size of a force in the front-back direction that the rider applies to the left grip.

The inventors of the present application discovered that, when a rider is operating a bar handle, the rider increases their own sensitivity to pressures in the front-back direction that are imparted to the hands of the rider from the bar handle. Based on this finding, the inventors of the present application conceived of the idea of imparting tactile stimulation to a rider by means of a pressure in the front-back direction that is imparted to the hands of the rider from the bar handle. The rider increases their own sensitivity with respect to pressures in the front-back direction that are imparted to the hands of the rider from a bar handle. Therefore, the rider can feel a tactile stimulation imparted by means of a pressure in the front-back direction which is imparted to the hands of the rider from the bar handle. Based on the foregoing findings, the inventors of the present application arrived at a straddled vehicle having the configuration described hereunder.

A straddled vehicle of (1) includes:
a vehicle body frame, a seat of (A), a bar handle of (B), a steerable wheel of (C), and a tactile stimulation actuator of (D).
(A) The seat is supported by the vehicle body frame, and is straddled by a rider.
(B) The bar handle is supported by the vehicle body frame such that the bar handle is allowed to rotate about a steering axis extending in an up-down direction;
   the bar handle includes a left grip and a right grip;
   the left grip is located further leftward than a center in a vehicle-body-frame left-right direction, and is held by a left hand of the rider; and
   the right grip is located further rightward than the center in the vehicle-body-frame left-right direction with respect to the vehicle body frame in an upright state, and is held by a right hand of the rider.
(C) The steerable wheel is supported by the vehicle body frame such that the steerable wheel is allowed to rotate about a wheel axle;
   the steerable wheel is steered leftward by the rider rotating the bar handle counterclockwise as viewed in downward direction; and
   the steerable wheel is steered rightward by the rider rotating the bar handle clockwise as viewed in downward direction.
(D) The tactile stimulation actuator communicates information to the rider by imparting a frontward or backward pressure as a tactile stimulation to the left hand or the right hand of the rider.

According to the straddled vehicle of (1), tactile stimulation can be imparted to a rider by adopting a technical concept that is different from a technical concept of imparting tactile stimulation by vibration of a general vibrator. More specifically, a bar handle vibrates due to vibration of a drive source such as an engine or an electric motor. Therefore, if vibration of the bar handle and vibration of a general vibrator occur at the same time, it is difficult for the rider to distinguish between the vibration of the bar handle and the vibration of the general vibrator.

While a rider is driving a straddled vehicle, the sensitivity of the rider with respect to a pressure received in the front-back direction from the bar handle increases. Hence, it is easy for the rider to notice a pressure received in a frontward direction or a backward direction from a left grip or a right grip. Therefore, in the straddled vehicle of (1), the tactile stimulation actuator communicates information to the rider by imparting a frontward pressure or a backward pressure as tactile stimulation to the left hand or the right hand of the rider. By this means, even if the bar handle vibrates due to vibration of a drive source such as an engine or an electric motor, the rider can distinguish between the vibration of the bar handle and the tactile stimulation that the tactile stimulation actuator generates. That is, the straddled vehicle of (1) can communicate information to a rider by imparting a tactile stimulation to the rider by adopting a technical concept that is different from the technical concept of imparting a tactile stimulation by vibration of a general vibrator.

A straddled vehicle of (2) is configured in accordance with the straddled vehicle of (1), wherein:
the tactile stimulation actuator imparts the pressure to the right hand of the rider and does not impart the pressure to the left hand of the rider, or imparts the pressure to the left hand of the rider and does not impart the pressure to the right hand of the rider.

A straddled vehicle of (3) is configured in accordance with the straddled vehicle of (1), wherein:
the tactile stimulation actuator imparts the pressure to the right hand of the rider and imparts the pressure to the left hand of the rider.

A straddled vehicle of (4) is configured in accordance with the straddled vehicle of (3), wherein:
the tactile stimulation actuator imparts the pressure in a frontward direction to the right hand of the rider and imparts the pressure in a frontward direction to the left hand of the rider, or imparts the pressure in a backward direction to the right hand of the rider and imparts the pressure in a backward direction to the left hand of the rider.

According to the straddled vehicle of (4), the tactile stimulation actuator imparts a pressure in the same direction to the left hand and the right hand of the rider. In this case, the tactile stimulation actuator is configured such that the direction of the pressure that the tactile stimulation actuator imparts to the right hand of the rider and the direction of the pressure that the tactile stimulation actuator imparts to the left hand of the rider do not become opposite directions to each other.

A straddled vehicle of (5) is configured in accordance with the straddled vehicle of (3), wherein:
the tactile stimulation actuator imparts the pressure in a frontward direction to the right hand of the rider and imparts the pressure in a backward direction to the left hand of the rider, or imparts the pressure in a backward direction to the right hand of the rider and imparts the pressure in a frontward direction to the left hand of the rider.

According to the straddled vehicle of (5), the tactile stimulation actuator imparts a pressure in opposite directions to the left hand and the right hand of the rider. In this case, the tactile stimulation actuator is configured such that the direction of the pressure that the tactile stimulation actuator imparts to the right hand of the rider and the direction of the pressure that the tactile stimulation actuator imparts to the left hand of the rider do not become the same direction as each other.

A straddled vehicle of (6) is configured in accordance with the straddled vehicle of any one of (1) to (5), wherein:
the left grip or the right grip imparts the pressure in a frontward direction or a backward direction to the left hand or the right hand of the rider by the tactile stimulation actuator causing the left grip or the right grip to deform such that the left grip or the right grip protrudes frontward or backward.

A straddled vehicle of (7) is configured in accordance with the straddled vehicle of (6), wherein:
the tactile stimulation actuator includes a piezoelectric element disposed at the left grip or the right grip, the piezoelectric element deforming such that a size of the piezoelectric element in a front-back direction changes, and
the tactile stimulation actuator causes the left grip or the right grip to deform such that the left grip or the right grip protrudes frontward or backward, by means of deformation of the piezoelectric element.

A straddled vehicle of (8) is configured in accordance with the straddled vehicle of (6), wherein:
the tactile stimulation actuator includes a cam that is disposed at the left grip or the right grip, and a motor that causes the cam to rotate, and
the tactile stimulation actuator causes the left grip or the right grip to deform such that the left grip or the right grip protrudes frontward or backward, by rotation of the cam.

A straddled vehicle of (9) is configured in accordance with the straddled vehicle of (6), wherein:
the tactile stimulation actuator includes a balloon that is disposed at the left grip or the right grip, and a pump that injects a fluid into the balloon, and
the tactile stimulation actuator causes the left grip or the right grip to deform such that the left grip or the right grip protrudes frontward or backward, by expansion of the balloon.

A straddled vehicle of (10) is configured in accordance with the straddled vehicle of any one of (1) to (5), wherein:
the tactile stimulation actuator includes a motor that imparts to the bar handle a force that causes the bar handle to rotate about the steering axis, and
the tactile stimulation actuator imparts the pressure in a frontward direction or a backward direction to the left hand or the right hand of the rider by means of the left grip or the right grip, by causing the motor to rotate the bar handle.

A straddled vehicle of (11) is configured in accordance with the straddled vehicle of any one of (1) to (10), wherein:
the straddled vehicle includes a tactile-stimulation-information-communicating-apparatus including: the tactile stimulation actuator, a tactile-stimulation-actuator-control-portion, and an information generating portion that acquires and generates information to be communicated to the rider, and
the tactile-stimulation-actuator-control-portion controls the tactile stimulation actuator such that the tactile stimulation actuator imparts the pressure in a frontward direction or a backward direction to the left hand or the right hand of the rider, based on information to be communicated to the rider that the information generating portion generates.

A straddled vehicle of (12) is configured in accordance with the straddled vehicle of (11), wherein:
the straddled vehicle travels along a traffic lane;
a traffic lane width direction is a width direction of the traffic lane;
two edges in the traffic lane width direction of the traffic lane include a first edge and a second edge;
the information generating portion includes:
   a notification determining portion that determines whether or not a first straddled-vehicle-to-traffic-lane-edge-distance between the straddled vehicle and the first edge or a second straddled-vehicle-to-traffic-lane-edge-distance between the straddled vehicle and the second edge is equal to or less than a rider notification distance, or whether or not the first straddled-vehicle-to-traffic-lane-edge-distance between the straddled vehicle and the first edge or the second straddled-vehicle-to-traffic-lane-edge-distance between the straddled vehicle and the second edge is shorter than a rider notification distance; and
   in a case where the first straddled-vehicle-to-traffic-lane-edge-distance or the second straddled-vehicle-to-traffic-lane-edge-distance is equal to or less than a rider notification distance, or a case where the first straddled-vehicle-to-traffic-lane-edge-distance or the second straddled-vehicle-to-traffic-lane-edge-distance is shorter than a rider notification distance, the tactile stimulation actuator communicates information to the effect that the straddled vehicle is approaching either one of the two edges in the traffic lane width direction of the traffic lane as the information to the rider by imparting the pressure in a frontward direction or a backward direction to the left hand or the right hand of the rider as a tactile stimulation.

According to the straddled vehicle of (12), a rider can recognize by means of a tactile stimulation imparted by the tactile stimulation actuator that the straddled vehicle is approaching either of the two edges in the traffic lane width direction of a traffic lane.

The aforementioned objects and other objects, features, aspects and advantages of the present teaching will become more apparent from the following detailed description of embodiments of the invention that are described in association with the attached drawings.

As used herein, the term "and/or" includes any and all combinations of one or more of the associated listed items.

It will be further understood that the terms "including", "comprising" or "having" and variations thereof when used in this specification, specify the presence of stated features, steps, operations, elements, components, and/or their equivalents but do not preclude the presence or addition of one or more other features, steps, operations, elements, components and/or groups thereof.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In describing the invention, it will be understood that a number of techniques and steps are disclosed. Each of these have individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

In the following description, for the purpose of explanation, numerous specific details are set forth in order to provide a thorough understanding of the present teaching. It will be evident, however, to one skilled in the art that the present teaching may be practiced without these specific details. The present disclosure is to be considered as an exemplification of the invention, and is not intended to limit the invention to the specific embodiments illustrated by the figures or description below.

### BRIEF DESCRIPTION OF DRAWINGS

[FIG. 1] FIG. 1 is a view of a straddled vehicle 1 and 1a as seen from a leftward direction L.
[FIG. 2] FIG. 2 is a view of the vicinity of a bar handle 8 of the straddled vehicle 1 as seen from a frontward direction F.
[FIG. 3] FIG. 3 is a view of the bar handle 8 of the straddled vehicle 1 as seen from an upward direction U.
[FIG. 4] FIG. 4 is a multiple view drawing that includes a functional block diagram of the straddled vehicle 1 and a view of a front part of the straddled vehicle 1 as seen from the upward direction U.
[FIG. 5] FIG. 5 is a graph illustrating the relation between the sizes of pressures FLF, FLB, FRF and FRB and time.
[FIG. 6] FIG. 6 is a flowchart illustrating operations of a tactile-stimulation-information-communicating-apparatus 100.
[FIG. 7] FIG. 7 is multiple view drawing that includes a view of a front part of a straddled vehicle 1a according to a second embodiment as seen from the upward direction U, and a cross-sectional view of a left grip 8L.
[FIG. 8] FIG. 8 is a cross-sectional view of a left grip 8L of a tactile-stimulation-information-communicating-apparatus 100b along a cross section perpendicular to an up-down direction UD.
[FIG. 9] FIG. 9 is a table showing operations of the tactile-stimulation-information-communicating-apparatus 100b.
[FIG. 10] FIG. 10 is a cross-sectional view of a left grip 8L of a tactile-stimulation-information-communicating-apparatus 100c along a cross section perpendicular to the up-down direction UD.
[FIG. 11] FIG. 11 is a cross-sectional view of a left grip 8L of a tactile-stimulation-information-communicating-apparatus 100d along a cross section perpendicular to the up-down direction UD.
[FIG. 12] FIG. 12 is a cross-sectional view of a left grip 8L of a tactile-stimulation-information-communicating-apparatus 100e along a cross section perpendicular to the up-down direction UD.
[FIG. 13] FIG. 13 is a cross-sectional view of a left grip 8L of a tactile-stimulation-information-communicating-apparatus 100f along a cross section perpendicular to a left-right direction LR.
[FIG. 14] FIG. 14 is a view illustrating a first arrangement example showing the arrangement of tactile stimulation actuators 70FL, 70BL, 70FR, 70BR, 71FL, 71BL, 71FR, 71BR, 72FL, 72BL, 72FR and 72BR.
[FIG. 15] FIG. 15 is a view illustrating a second arrangement example showing the arrangement of tactile stimulation actuators 70FL, 70BL, 71FL, 71BL, 72FL and 72BL.
[FIG. 16] FIG. 16 is a view illustrating a third arrangement example showing the arrangement of tactile stimulation actuators 70FL, 71FL, 72FL, 70FR, 71FR and 72FR.
[FIG. 17] FIG. 17 is a view illustrating a fourth arrangement example showing the arrangement of tactile stimulation actuators 70FL, 71FL, 72FL, 70BR, 71BR and 72BR.
[FIG. 18] FIG. 18 is a graph illustrating the relation between a size of pressures FLF, FLB, FRF and FRB according to a first pattern and time.
[FIG. 19] FIG. 19 is a graph illustrating the relation between a size of pressures FLF, FLB, FRF and FRB according to a second pattern and time.
[FIG. 20] FIG. 20 is a graph illustrating the relation between a size of pressures FLF, FLB, FRF and FRB according to a third pattern and time.
[FIG. 21] FIG. 21 is a graph illustrating the relation between a size of pressures FLF, FLB, FRF and FRB according to a fourth pattern and time.
[FIG. 22] FIG. 22 is a graph illustrating the relation between a size of pressures FLF, FLB, FRF and FRB according to a fifth pattern and time.

### DESCRIPTION OF EMBODIMENTS

### (First Embodiment)

### [Overall Configuration]

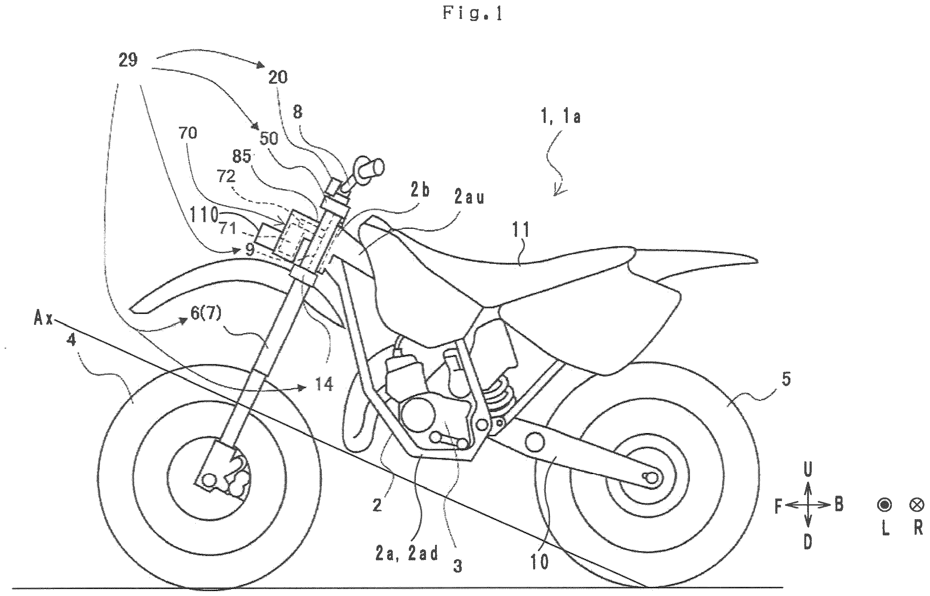

The overall configuration of a straddled vehicle 1 according to a first embodiment of the present teaching is described hereunder with reference to the accompanying drawings. FIG. 1 is a view of the straddled vehicle 1 as seen from the leftward direction L.

Hereinafter, a frontward direction "F" is the frontward direction in the straddled vehicle (1) front-back direction. A backward direction "B" is the backward direction in the straddled vehicle (1) front-back direction. A leftward direction "L" is the leftward direction in the straddled vehicle (1) left-right direction. A rightward direction "R" is the rightward direction in the straddled vehicle (1) left-right direction. An upward direction "U" is the upward direction in the straddled vehicle (1) up-down direction. A downward direction "D" is the downward direction in the straddled vehicle (1) up-down direction. A front-back direction "FB" is the straddled vehicle (1) front-back direction. A left-right direction "LR" is the straddled vehicle (1) left-right direction. An up-down direction "UD" is the straddled vehicle (1) up-down direction. The frontward direction "F" refers to the frontward direction when taking a rider who is astride the straddled vehicle 1 as a reference. The backward direction "B" refers to the backward direction when taking a rider who is astride the straddled vehicle 1 as a reference. The leftward direction "L" refers to the leftward direction when taking a rider who is astride the straddled vehicle 1 as a reference. The rightward direction "R" refers to the rightward direction when taking a rider who is astride the straddled vehicle 1 as a reference. The upward direction "U" refers to the upward direction when taking a rider who is astride the straddled vehicle 1 as a reference. The downward direction "D" refers to the downward direction when taking a rider who is astride the straddled vehicle 1 as a reference.

In the present specification, an axis or a member extending in the front-back direction does not necessarily refer to only an axis or a member that is parallel with the front-back direction. In this specification, an axis or a member extending in the front-back direction refers to an axis or a member that is inclined within a range of ±45° with respect to the front-back direction. Similarly, herein, an axis or a member extending in the up-down direction refers to an axis or a member that is inclined within a range of ±45° with respect to the up-down direction. Likewise, an axis or a member extending in the left-right direction refers to an axis or a member that is inclined within a range of ±45° with respect to the left-right direction. Further, the term "an upright state of the vehicle body frame 2" means a state in which the steerable wheel is neither steering nor leaning, without a rider riding on the straddled vehicle 1 and without fuel loaded in the straddled vehicle 1.

In the present specification, the phrase "a first member is supported by a second member" includes a case in which the first member is attached to the second member so as to be immovable with respect to the second member (that is, is secured thereto), and a case in which the first member is attached to the second member so as to be movable with respect to the second member. Further, the phrase "the first member is supported by the second member" includes both a case in which the first member is directly attached to the second member and a case in which the first member is attached to the second member via a third member.

In the present specification, the phrase "a first member and a second member which are aligned in the front-back direction" refers to the following state. That is, a state in which, when the first member and the second member are seen from a direction perpendicular to the front-back direction, both of the first member and the second member are disposed on any straight line indicating the front-back direction. In the present specification, the phrase "a first member and a second member which are aligned in the front-back direction when seen in the up-down direction" refers to the following state. That is, a state in which, when the first member and the second member are seen in the up-down direction, both of the first member and the second member are disposed on any straight line indicating the front-back direction. In this case, when the first member and the second member are seen in the left-right direction which is different from the up-down direction, either one of the first member and the second member need not be disposed on any straight line indicating the front-back direction. Note that the first member and the second member may be in contact with each other. The first member and the second member may also be apart from each other. A third member may be present between the first member and the second member. The foregoing definitions also apply to directions other than the front-back direction.

In the present specification, the phrase "a first member is disposed further forward than a second member" indicates the following state. That is, the first member is disposed in front of a plane which passes through the front end of the second member and is orthogonal to the front-back direction. In this case, the first member and the second member may be aligned in the front-back direction, or need not be aligned in the front-back direction. This definition also applies to directions other than the front-back direction.

In the present specification, the phrase "a first member is disposed in front of a second member" indicates the following state. That is, at least one part of the first member is disposed in a region through which the second member passes when moving parallelly in the frontward direction. Thus, the first member may fit in the region through which the second member passes when moving parallelly in the frontward direction, or may protrude from the region through which the second member passes when moving parallelly in the frontward direction. In this case, the first member and the second member are aligned in the front-back direction. This definition also applies to directions other than the front-back direction.

In the present specification, the phrase "a first member is disposed in front of a second member as seen in the left-right direction" refers to the following state. That is, the first member and the second member are aligned in the front-back direction as seen in the left-right direction, and a part of the first member opposed to the second member is disposed in front of the second member as seen in the left-right direction. In this definition, the first member and the second member need not be aligned in the front-back direction in a three dimensional space. This definition also applies to directions other than the front-back direction.

In the present specification, unless expressly stated otherwise, the respective parts of a first member are defined as follows. The term "front part" of the first member means the front half of the first member. The term "rear part" of the first member means the rear half of the first member. The term "left part" of the first member means the left half of the first member. The term "right part" of the first member means the right half of the first member. The term "upper part" of the first member means the upper half of the first member. The term "lower part" of the first member means the lower half of the first member. The term "top end" of the first member means the upper end of the first member. The term "bottom end" of the first member means the lower end of the first member. The term "front end" of the first member means the end at the front of the first member. The term "back end" of the first member means the end at the back of the first member. The term "left end" of the first member means the end on the left side of the first member. The term "right end" of the first member means the end on the right side of the first member. The term "top end part" of the first member means the top end of the first member and the vicinity of the top end. The term "bottom end part" of the first member means the bottom end of the first member and the vicinity of the bottom end. The term "front end part" of the first member means the front end of the first member and the vicinity of the front end. The term "back end part" of the first member means the back end of the first member and the vicinity of the back end. The term "left end part" of the first member means the left end of the first member and the vicinity of the left end. The term "right end part" of the first member means the right end of the first member and the vicinity of the right end. The term "first member" means a member constituting part of the straddled vehicle 1.

As illustrated in FIG. 1, the straddled vehicle 1 includes a vehicle body frame 2, a drive source 3, a steerable wheel 4, a driving wheel 5, a bar handle 8, a swing arm 10, a seat 11 and a steering mechanism 29. The vehicle body frame 2 leans in the leftward direction L when the straddled vehicle 1 turns in the leftward direction L. The vehicle body frame 2 leans in the rightward direction R when the straddled vehicle 1 turns in the rightward direction R. The vehicle body frame 2 leans in the leftward direction L or the rightward direction R by rotating about a roll axis Ax. The roll axis Ax is an axis that extends in the front-back direction FB. More specifically, as illustrated in FIG. 1, the roll axis Ax is a straight line that, in an upright state of the vehicle body frame 2, passes through a point at which the driving wheel 5 is in contact with the ground and that is perpendicular to a steering shaft 9. When seen from the frontward direction F, the roll axis Ax is located at the center of the vehicle body frame 2 in the left-right direction LR in an upright state.

The vehicle body frame 2 includes a main frame 2a and a head pipe 2b. The main frame 2a has a structure in which a plurality of pipes are connected. The main frame 2a includes a main-frame-upper-part 2au and a main-frame-lower-part 2ad. When seen from the upward direction U, the main-frame-upper-part 2au extends in the front-back direction FB. The main-frame-lower-part 2ad is disposed below the main-frame-upper-part 2au in the downward direction D. The main-frame-lower-part 2ad has a "U" shape when seen from the leftward direction L or the rightward direction R. Two ends of the main-frame-lower-part 2ad are connected to the main-frame-upper-part 2au. Thus, the main-frame-upper-part 2au and the main-frame-lower-part 2ad have a circular shape when seen from the leftward direction L or the rightward direction R.

The head pipe 2b is fixed to the front end of the main-frame-upper-part 2au. The head pipe 2b has a cylindrical shape that extends in the up-down direction UD. However, when seen from the leftward direction L or the rightward direction R, the top end of the head pipe 2b is located further backward than the bottom end of the head pipe 2b in the backward direction B. Thus, the central axis of the head pipe 2b leans slightly in the backward direction B with respect to the up-down direction UD.

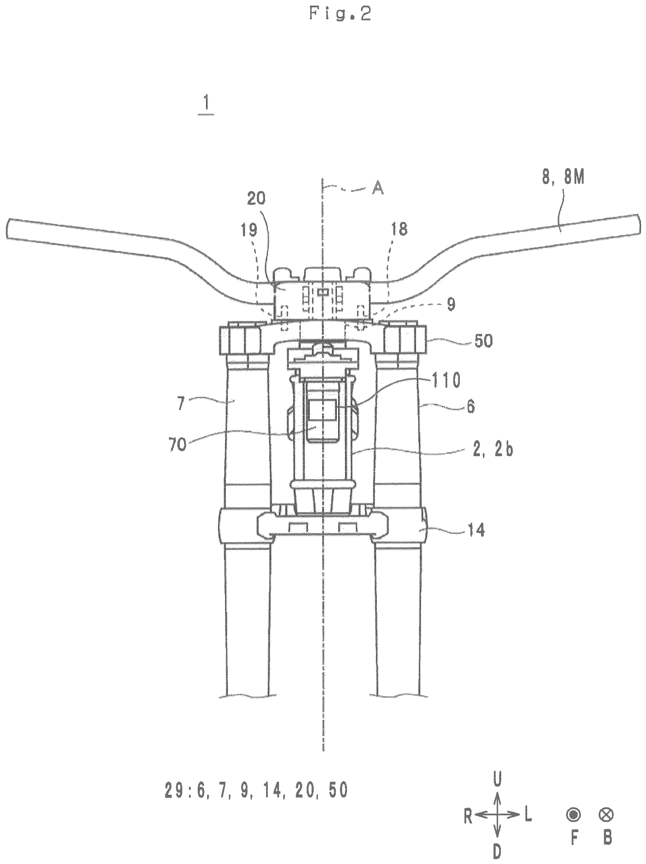

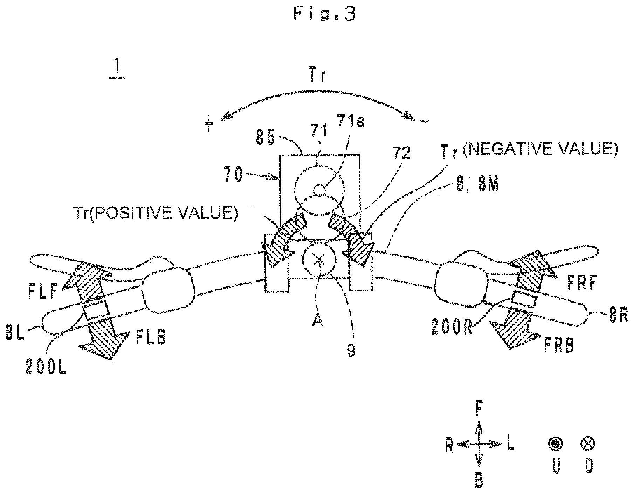

Next, the bar handle 8 and the steering mechanism 29 will be described with reference to the drawings. FIG. 2 is a view of the vicinity of the bar handle 8 of the straddled vehicle 1 as seen from the frontward direction F. FIG. 3 is a view of bar handle 8 of the straddled vehicle 1 as seen from the upward direction U.

As illustrated in FIG. 2, the bar handle 8 is supported by the vehicle body frame 2 (more precisely, by the head pipe 2b) so as to be rotatable about a steering axis A extending in the up-down direction UD. The steering axis A matches the central axis of the head pipe 2b. The movable range of the bar handle 8 is not more than 180 degrees (half-rotation). The movable range is taken as the difference between the steering angle when the bar handle 8 is rotated to the maximum in the leftward direction L and the steering angle when the bar handle 8 is rotated to the maximum in the rightward direction R (lock to lock).

As illustrated in FIG. 3, the bar handle 8 includes a bar-handle-main-body 8M, a left grip 8L and a right grip 8R. The bar-handle-main-body 8M is a pipe that, with respect to the vehicle body frame 2 in an upright state, extends in the left-right direction LR.

The left grip 8L is provided at a position that, with respect to the vehicle body frame 2 in an upright state, is further in the leftward direction L than the center of the vehicle-body-frame 2 in left-right direction LR. Specifically, the left grip 8L has a cylindrical shape. A left end part of the bar-handle-main-body 8M is inserted into the left grip 8L. The left grip 8L is held by a left hand HL (not illustrated in FIG. 3) of the rider. The right grip 8R is provided at a position that, with respect to the vehicle body frame 2 in an upright state, is further in the rightward direction R than the center of the vehicle-body-frame 2 in left-right direction LR. Specifically, the right grip 8R has a cylindrical shape. A right end part of the bar-handle-main-body 8M is inserted into the right grip 8R. The right grip 8R is held by a right hand HR (not illustrated in FIG. 3) of the rider. As described later, the left grip 8L and the right grip 8R elastically deform. Therefore, the material of the left grip 8L and the right grip 8R is a material that can elastically deform, for example, an elastic material such as rubber or resin.

As illustrated in FIG. 2, the steering mechanism 29 is supported by the head pipe 2b of the vehicle body frame 2. The steering mechanism 29 includes a transmission member 20, a top bridge 50, a bottom bridge 14, a left shock absorber 6, a right shock absorber 7 and the steering shaft 9.

The steering shaft 9 extends in the up-down direction UD. The steering shaft 9 penetrates the head pipe 2b in the up-down direction UD. By this means the steering shaft 9 is supported by the head pipe 2b so as to be rotatable about the steering axis A. The top bridge 50 is fixed to the upper part of the steering shaft 9. The top bridge 50 is a plate-shaped member that extends in the left-right direction LR when the vehicle body frame 2 is in an upright state. The bottom bridge 14 is fixed to the bottom end part of the steering shaft 9. The bottom bridge 14 is a plate-shaped member that extends in the left-right direction LR when the vehicle body frame 2 is in an upright state. Since the top bridge 50 and the bottom bridge 14 are fixed to the steering shaft 9, the top bridge 50 and the bottom bridge 14 are allowed to rotate about the steering axis A together with the steering shaft 9.

The left shock absorber 6 extends in the up-down direction UD. When the vehicle body frame 2 is in an upright state, the left shock absorber 6 is disposed to the left L of the steering shaft 9. The left shock absorber 6 is fixed to a left part of the top bridge 50 and a left part of the bottom bridge 14. In addition, the left shock absorber 6 extends in the downward direction D from the left part of the top bridge 50 and the left part of the bottom bridge 14. The left shock absorber 6 is a combination of a spring and a damper, and can expand and contract in the up-down direction UD. The right shock absorber 7 extends in the up-down direction UD. When the vehicle body frame 2 is in an upright state, the right shock absorber 7 is disposed to the right R of the steering shaft 9. The right shock absorber 7 is fixed to a right part of the top bridge 50 and a right part of the bottom bridge 14. In addition, the right shock absorber 7 extends in the downward direction D from the right part of the top bridge 50 and the right part of the bottom bridge 14. The right shock absorber 7 is a combination of a spring and a damper, and can expand and contract in the up-down direction UD. Since the left shock absorber 6 and the right shock absorber 7 are fixed to the top bridge 50 and the bottom bridge 14, the left shock absorber 6 and the right shock absorber 7 are allowed to rotate about the steering axis A together with the steering shaft 9.

The transmission member 20 is fixed to the top surface of the top bridge 50. The transmission member 20 holds the center of the bar-handle-main-body 8M in the left-right direction LR. By this means, the bar handle 8 is fixed to the top end of the steering shaft 9. Therefore, the bar handle 8 can be rotated about the steering axis A together with the steering mechanism 29.

As illustrated in FIG. 1, the steerable wheel 4 is supported by the vehicle body frame 2 such that the steerable wheel 4 is allowed to rotate about a wheel axle. More specifically, the wheel axle connects the bottom end part of the left shock absorber 6 and the bottom end part of the right shock absorber 7. In the vehicle body frame 2 in an upright state, the wheel axle passes through the center of the steerable wheel 4, in the left-right direction LR. By this means, the steerable wheel 4 is supported by the vehicle body frame 2 via the steering mechanism 29. Hence, the steerable wheel 4 can be rotated about the steering axis A together with the bar handle 8 and the steering mechanism 29. When seen from the upward direction U, the steerable wheel 4 is caused to rotate counterclockwise by the rider rotating the bar handle 8 counterclockwise. By this means, the steerable wheel 4 is steered in the leftward direction L. When seen from the upward direction U, the steerable wheel 4 is caused to rotate clockwise by the rider rotating the bar handle 8 clockwise. By this means, the steerable wheel 4 is steered in the rightward direction R. Further, the steerable wheel 4 can move vertically by the left shock absorber 6 and the right shock absorber 7 expanding and contracting.

As illustrated in FIG. 1, the swing arm 10 extends backward from the lower part of the main-frame-lower-part 2ad. The swing arm 10 is supported by the main-frame-lower-part 2ad so as to be capable of rotating about an axis extending in the left-right direction LR. By this means, the back end part of the swing arm 10 can move vertically.

As illustrated in FIG. 1, the driving wheel 5 is supported by the back end part of the swing arm 10 such that the driving wheel 5 is allowed to rotate about the center of a wheel axle. The wheel axle is disposed at the back end part of the swing arm 10. The wheel axle passes through the center of the driving wheel 5, in the left-right direction LR. Since the back end part of the swing arm 10 can move vertically, the driving wheel 5 can also move vertically.

As illustrated in FIG. 1, the drive source 3 generates a driving force that causes the driving wheel 5 to rotate. The drive source 3 is an engine or an electric motor or the like. The drive source 3 is supported by the vehicle body frame 2. More specifically, when seen from the leftward direction L or the rightward direction R, the drive source 3 is disposed in a space that is surrounded by the main-frame-upper-part 2au and the main-frame-lower-part 2ad. The drive source 3 is fixed to the vehicle body frame 2. The driving force that the drive source 3 generates is transmitted to the driving wheel 5 through a transmission mechanism such as a transmission gear. By this means, the driving wheel 5 is caused to rotate by the driving force that the drive source 3 generates.

The seat 11 is supported by the vehicle body frame 2. The rider straddles the seat 11.

### [Tactile-stimulation-information-communicating-apparatus]

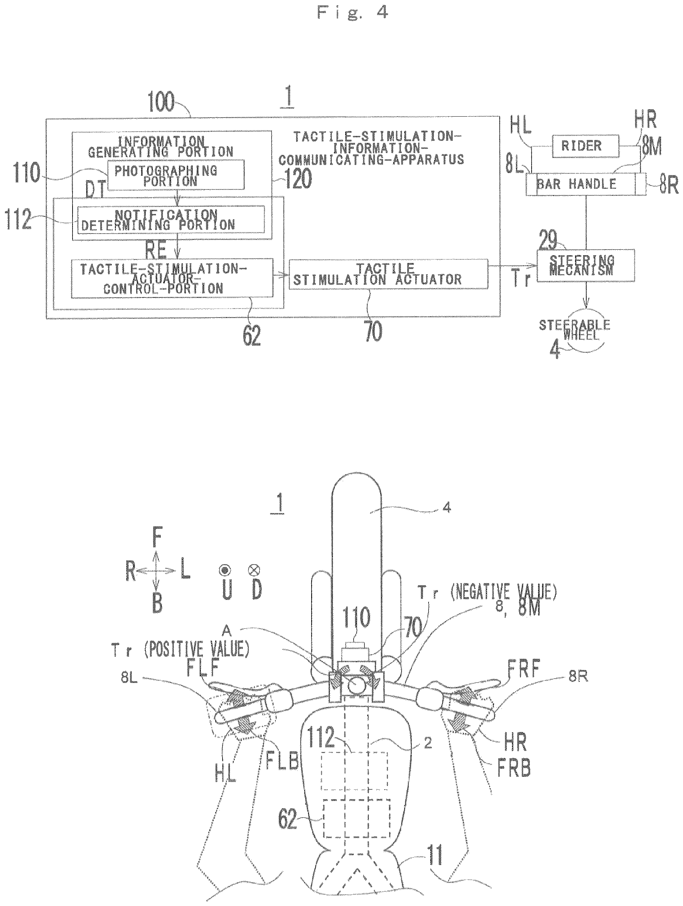

A tactile-stimulation-information-communicating-apparatus 100 will now be described with reference to the drawings. FIG. 4 is a multiple view drawing that includes a functional block diagram of the straddled vehicle 1, and a view of a front part of the straddled vehicle 1 as seen from the upward direction U.

As illustrated in FIG. 4, the straddled vehicle 1 also includes a tactile-stimulation-information-communicating-apparatus 100. The tactile-stimulation-information-communicating-apparatus 100 includes an information generating portion 120, a tactile-stimulation-actuator-control-portion 62 and a tactile stimulation actuator 70. The information generating portion 120 acquires and generates information to be communicated to the rider. In the present embodiment, the information to be communicated to the rider is information to the effect that the straddled vehicle 1 is approaching either one of two edges in the traffic lane width direction of a traffic lane. The term "traffic lane width direction" refers to the width direction of a traffic lane, and matches the left-right direction LR. The information generating portion 120 includes a photographing portion 110 and a notification determining portion 112.

The photographing portion 110 is disposed in the vicinity of the front end of the vehicle body frame 2. In the present embodiment, the photographing portion 110 is disposed in front of the tactile stimulation actuator 70, described later, in the frontward direction F. The photographing portion 110 photographs the area in front of the straddled-vehicle 1 in frontward direction F. The photographing portion 110 generates photographic data DT, and outputs the photographic data DT to the notification determining portion 112. The photographing portion 110 is constituted by, for example, a combination of a solid-state image sensing device such as a CCD (Charge Coupled Device) image sensor or a CMOS (Complementary Metal-Oxide-Semiconductor) image sensor and an optical element such as a lens. However, the photographing portion 110 may include an image pickup device other than a CCD image sensor or a COM image sensor. The photographing portion 110 may also be, for example, a LIDAR (Light Detection And Ranging) device.

The notification determining portion 112 determines, based on the photographic data DT, whether or not a first straddled-vehicle-to-traffic-lane-edge-distance D1 between the straddled vehicle 1 and a left edge (first edge) of a traffic lane or a second straddled-vehicle-to-traffic-lane-edge-distance D2 between the straddled vehicle 1 and right edge (second edge) of the traffic lane has become equal to or less than a rider notification distance D0. The rider notification distance D0 is a distance at which it is necessary for the tactile-stimulation-information-communicating-apparatus 100 to notify the rider that the straddled vehicle 1 is coming close to the left edge of the traffic lane or the right edge of the traffic lane. The rider notification distance D0 is, for example, 80 cm. Note that the rider notification distance D0 is not limited to 80 cm. Hereunder, one example of a determination by the notification determining portion 112 will be described by way of a specific example.

A traffic lane is defined by a left white line located at a left edge of the traffic lane and a right white line located at a right edge of the traffic lane. Hereunder, the left edge of a traffic lane is also referred to as a "left white line". The right edge of a traffic lane is also referred to as a "right white line". The left white line and right white line are included in the photographic data DT. Therefore, the notification determining portion 112 calculates the first straddled-vehicle-to-traffic-lane-edge-distance D1 by counting, in an image of the photographic data DT, the number of dots from the center of the image in the left-right direction LR (that is, the center of the straddled-vehicle (1) left-right direction LR) to the left white line (for example, the right edge of the left white line). Further, the notification determining portion 112 calculates the second straddled-vehicle-to-traffic-lane-edge-distance D2 by counting, in an image of the photographic data DT, the number of dots from the center of the image in the left-right direction LR to the right white line (for example, left edge of the right white line). Note that, the upward direction U in an image of the photographic data DT is the direction away from the straddled vehicle 1 in the frontward direction F. Accordingly, the number of dots between the left white line and the right white line decreases progressively in the upward direction U in the image of the photographic data DT. Therefore, the notification determining portion 112, for example, counts the number of dots at a position that is five meters in front of the straddled vehicle 1 in the image of the photographic data DT. A position at which to count the number of dots is not limited to five meters. Note that a method for calculating the first straddled-vehicle-to-traffic-lane-edge-distance D1 and the second straddled-vehicle-to-trafric-lane-edge-distance D2 is not limited to the aforementioned method. Accordingly, a currently well-known method or a method that becomes well-known in the future can be applied as the method for calculating the first straddled-vehicle-to-traffic-lane-edge-distance D1 and the second straddled-vehicle-to-traffic-lane-edge-distance D2. Further, the first straddled-vehicle-to-traffic-lane-edge-distance D1 and the second straddled-vehicle-to-traffic-lane-edge-distance D2 may be measured by using, for example, light or ultrasound.

The notification determining portion 112 outputs a determination result RE (information to be communicated to the rider) to the tactile-stimulation-actuator-control-portion 62 described later. The determination result RE is a result of a determination as to whether or not the first straddled-vehicle-to-traffic-lane-edge-distance D1 or the second straddled-vehicle-to-traffic-lane-edge-distance D2 is equal to or less than the rider notification distance D0. The notification determining portion 112 is, for example, an ECU (Electric Control Unit) that is a combination of an IC (Integrated Circuit), electronic components and a circuit board.

The tactile stimulation actuator 70 communicates information to the rider by imparting a frontward or backward pressure to the left hand HL (see FIG. 4) or the right hand HR (see FIG. 4) of the rider as a tactile stimulation. As illustrated in FIG. 3, the tactile stimulations are pressures FLF, FLB, FRF and FRB. The pressure FLF is a pressure that is imparted in the frontward direction F to the left hand HL of the rider (see FIG. 4). The pressure FLB is a pressure that is imparted in the backward direction B to the left hand HL of the rider (see FIG. 4). The pressure FRF is a pressure that is imparted in the frontward direction F to the right hand HR of the rider (see FIG. 4). The pressure FRB is a pressure that is imparted in the backward direction B to the right hand HR of the rider (see FIG. 4). The term "pressure" as used in the present specification is described hereunder.

In the present specification, the term "pressure" refers to a force that a rider can recognize when being pressed in any direction. For example, a vibration that a rider can recognize when vibrating in the front-back direction FB is included in the term "pressure". A vibration that a rider can recognize when vibrating in the front-back direction FB is a vibration for which the amplitude in the front-back direction FB is greater than the amplitude in the left-right direction LR and the amplitude in the up-down direction UD. On the other hand, a force which a rider cannot recognize when being pressed in any direction is not included in the term "pressure" as used in the specification of the present application. For example, vibrations for which the rider cannot recognize the vibration direction are not included in the term "pressure" as used in the specification of the present application. Vibrations for which the rider cannot recognize the vibration direction are, for example, a vibration for which the amplitude in the front-back direction FB and the amplitude in the up-down direction UD are equal, a vibration for which the amplitude in the front-back direction FB and the amplitude in the left-right direction LR are equal, and a vibration for which the amplitude in the front-back direction FB, the amplitude in the up-down direction UD and the amplitude in the left-right direction LR are equal. Further, the size of the force of the pressure need not change periodically as in the case of a vibration. Accordingly, as used herein, the term "pressure" also includes a case where, for example, a constant force that does not change with the passage of time is applied in the frontward direction F or backward direction B.

Hereunder, the tactile stimulation actuator 70 will be described in detail. The tactile stimulation actuator 70 generates a torque Tr that causes the bar handle 8 to rotate counterclockwise or clockwise when seen from the upward direction U. That is, the tactile stimulation actuator 70 generates a torque Tr that steers the steerable wheel 4 in the leftward direction L or rightward direction R. The torque Tr takes a positive value when the bar handle 8 is caused to rotate counterclockwise as seen from the upward direction U (when the steerable wheel 4 is steered in the leftward direction L). Hereinafter, the torque Tr having a positive value is also referred to as "counterclockwise torque Tr". As illustrated in FIG. 4, in the case of generating the torque Tr having a positive value, the tactile stimulation actuator 70 imparts a pressure FLB in the backward direction B to the left hand HL of the rider by means of the left grip 8L and imparts a pressure FRF in the frontward direction F to the right hand HR of the rider by means of the right grip 8R. The torque Tr takes a negative value when the bar handle 8 is caused to rotate clockwise as seen from the upward direction U (when the steerable wheel 4 is steered in the rightward direction R). Hereinafter, the torque Tr having a negative value is also referred to as "clockwise torque Tr". As illustrated in FIG. 4, in the case of generating the torque Tr having a negative value, the tactile stimulation actuator 70 imparts a pressure FLF in the frontward direction F to the left hand HL of the rider by means of the left grip 8L and imparts a pressure FRB in the backward direction B to the right hand HR of the rider by means of the right grip 8R.

The tactile stimulation actuator 70 described above includes, as illustrated in FIG. 3, an actuator main body 71, a reduction gear 72 and an attachment portion 85. The actuator main body 71 is disposed in front of the head pipe 2b in the frontward direction F (see FIG. 1). The actuator main body 71 is an electric motor. The actuator main body 71 generates a torque when the actuator main body 71 receives a supply of electric power. The actuator main body 71 includes an output shaft 71a. The output shaft 71a is caused to rotate when a torque is generated by the actuator main body 71. The reduction gear 72 reduces the speed of rotation of the output shaft 71a of the actuator main body 71, and transmits the rotation to the steering shaft 9. By this means, the reduction gear 72 converts the torque that the actuator main body 71 generates to the torque Tr, and imparts the torque Tr to the steering shaft 9. The attachment portion 85 is a case that accommodates the actuator main body 71 and the reduction gear 72. Further, the attachment portion 85 fixes the actuator main body 71 and the reduction gear 72 to the head pipe 2b.

As illustrated in FIG. 4, the tactile-stimulation-actuator-control-portion 62 communicates information to the rider by tactile stimulation, by controlling the tactile stimulation actuator 70 such that the tactile stimulation actuator 70 imparts a pressure in the frontward direction F or the backward direction B to the left hand HL or right hand HR of the rider. In the present specification, the phrase "the tactile stimulation actuator 70 imparts a pressure to the left hand HL or right hand HR of the rider" includes a case where the tactile stimulation actuator 70 imparts a pressure by directly contacting the left hand HL or the right hand HR of the rider, and a case where the tactile stimulation actuator 70 indirectly imparts a pressure to the left hand HL or the right hand HR of the rider through a member without directly contacting the left hand HL or the right hand HR of the rider. In the present embodiment, the tactile stimulation actuator 70 imparts a pressure indirectly to the left hand HL or the right hand HR of the rider through the left grip 8L or the right grip 8R.

As described in the foregoing, the tactile-stimulation-actuator-control-portion 62 acquires a determination result RE indicating whether or not the first straddled-vehicle-to-traffic-lane-edge-distance D1 or the second straddled-vehicle-to-traffic-lane-edge-distance D2 is equal to or less than the rider notification distance D0, from the notification determining portion 112. In a case where the first straddled-vehicle-to-traffic-lane-edge-distance D1 or the second straddled-vehicle-to-traffic-lane-edge-distance D2 is equal to or less than the rider notification distance D0, the tactile-stimulation-actuator-control-portion 62 controls the tactile stimulation actuator 70 such that the tactile stimulation actuator 70 imparts a pressure in the frontward direction F or the backward direction B to the left hand HL or the right hand HR of the rider through the left grip 8L or the right grip 8R. By this means, the tactile-stimulation-actuator-control-portion 62 communicates to the rider by tactile stimulation information to the effect that the straddled vehicle 1 is approaching either one of the left white line and the right white line.

Specifically, in a case where the first straddled-vehicle-to-traffic-lane-edge-distance D1 is equal to or less than the rider notification distance D0, the tactile-stimulation-actuator-control-portion 62 controls the tactile stimulation actuator 70 such that the tactile stimulation actuator 70 generates the torque Tr having a positive value (counterclockwise torque Tr). By this means, the bar handle 8 is caused to rotate counterclockwise as seen from the upward direction U. The left grip 8L imparts the pressure FLB in the backward direction B to the left hand HL of the rider, and the right grip 8R imparts the pressure FRF in the frontward direction F to the right hand HR of the rider. On the other hand, in a case where the second straddled-vehicle-to-traffic-lane-edge-distance D2 is equal to or less than the rider notification distance D0, the tactile-stimulation-actuator-control-portion 62 controls the tactile stimulation actuator 70 such that the tactile stimulation actuator 70 generates the torque Tr having a negative value (clockwise torque Tr). By this means, the bar handle 8 is caused to rotate clockwise as seen from the upward direction U. The left grip 8L imparts the pressure FLF in the frontward direction F to the left hand HL of the rider, and the right grip 8R imparts the pressure FRB in the backward direction B to the right hand HR of the rider.

The tactile-stimulation-actuator-control-portion 62 described above is, for example, an ECU (Electric Control Unit) that is a combination of an IC (Integrated Circuit), electronic components and a circuit board. In the present embodiment, as illustrated in FIG. 4, the tactile-stimulation-actuator-control-portion 62 and the notification determining portion 112 are constituted by a single ECU. However, the tactile-stimulation-actuator-control-portion 62 and the notification determining portion 112 may be constituted by two ECUs.

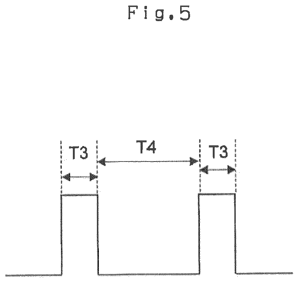

Next, patterns of the pressures FLF, FLB, FRF and FRB will be described while referring to the drawings. FIG. 5 is a graph illustrating the relation between the sizes of the pressures FLF, FLB, FRF and FRB and time. The abscissa axis represents time. The ordinate axis represents the size of the pressure.

In the graph of FIG. 5, a period in which the pressures FLF, FLB, FRF and FRB of a constant size are generated for a time period T3, and a period in which pressures are not generated for a time period T4 are repeated. That is, the pattern illustrated in FIG. 5 includes a plurality (two) of rectangular waves. In FIG. 5, the time period T4 is longer than the time period T3. The time period T3 is set to a length that allows the rider to feel the pressures. The tactile-stimulation-information-communicating-apparatus 100 imparts the pressures FLF, FLB, FRF and FRB which are vibrations that periodically fluctuate in this manner to the rider as tactile stimulation.

As illustrated in FIG. 1, the straddled vehicle 1 includes the drive source 3. Consequently, vibrations are generated in the vehicle body frame 2 and the bar handle 8 by driving of the drive source 3. Therefore, the period of the pressures FLF, FLB, FRF and FRB is preferably different from the periods of the vibrations generated in the vehicle body frame 2 and the bar handle 8. Further, the rider operates the bar handle 8. At such time, the rider often operates the bar handle 8 at a bar handle operation period. Therefore, it is preferable that the period of the pressures FLF, FLB, FRF and FRB is different from the bar handle operation period. In particular, it is preferable that the period of the pressures FLF, FLB, FRF and FRB is higher than the bar handle operation period.

### [Operations of tactile-stimulation-infonnation-communicating-apparatus]

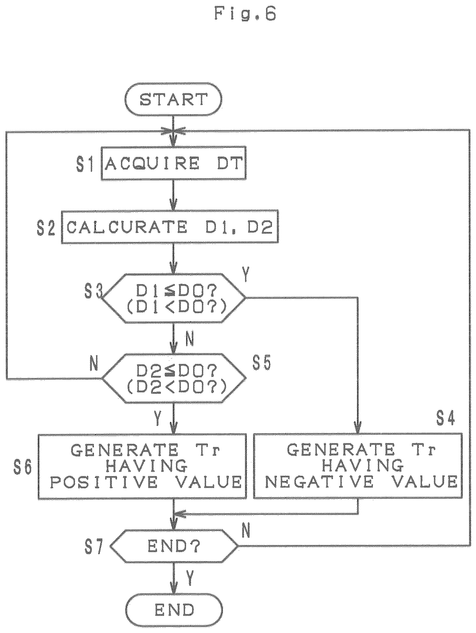

Next, operations of the tactile-stimulation-information-communicating-apparatus 100 will be described with reference to the drawings. FIG. 6 is a flowchart illustrating operations of the tactile-stimulation-information-communicating-apparatus 100. The tactile-stimulation-information-communicating-apparatus 100 executes the flowchart shown in FIG. 6 by executing a program that is stored in an unillustrated storage portion.

The present processing is started upon an ignition power source of the straddled vehicle 1 being switched from "off" to "on". In the present embodiment, the straddled vehicle 1 travels along a traffic lane. When the present processing starts, the photographing portion 110 photographs an area in front of the straddled-vehicle 1 in frontward direction F, and outputs photographic data DT to the notification determining portion 112. By this means, the notification determining portion 112 acquires the photographic data DT (step S1).

Next, the notification determining portion 112 calculates the first straddled-vehicle-to-traffic-lane-edge-distance D1 and the second straddled-vehicle-to-traffic-lane-edge-distance D2 based on the photographic data DT (step S2). In addition, the notification determining portion 112 determines whether or not the first straddled-vehicle-to-traffic-lane-edge-distance D1 is equal to or less than the rider notification distance D0 (step S3). In step S3, the notification determining portion 112 determines whether or not the straddled vehicle 1 is approaching a left white line. If the first straddled-vchicle-to-traffic-lane-edge-distance D1 is equal to or less than the rider notification distance D0, the present processing proceeds to step S4. If the first straddled-vehicle-to-traffic-lane-edge-distance D1 is not less than or equal to the rider notification distance D0, the present processing proceeds to step S5.

In a case where the first straddled-vehicle-to-traffic-lane-edge-distance D1 is equal to or less than the rider notification distance D0, the notification determining portion 112 outputs a determination result RE indicating that the first straddled-vehicle-to-traffic-lane-edge-distance D1 is equal to or less than the rider notification distance D0 to the tactile-stimulation-actuator-control-portion 62. Based on the determination result RE, the tactile-stimulation-actuator-control-portion 62 causes the tactile stimulation actuator 70 to generate the torque Tr that has a positive value (counterclockwise torque Tr) (step S4). By this means the bar handle 8 is caused to rotate counterclockwise by the tactile stimulation actuator 70, as seen from the upward direction U. As a result, the left grip 8L imparts the pressure FLB in the backward direction B to the left hand HL of the rider, and the right grip 8R imparts the pressure FRF in the frontward direction F to the right hand HR of the rider. By this means, the rider can recognize that the straddled vehicle 1 is approaching the left white line. Thereafter, the present processing proceeds to step S7.

In a case where the first straddled-vehicle-to-traffic-lane-edge-distance D1 is not less than or equal to the rider notification distance D0, the notification determining portion 112 determines whether or not the second straddled-vehicle-to-traffic-lane-edge-distance D2 is equal to or less than the rider notification distance D0 (step S5). In step S5, the notification determining portion 112 determines whether or not the straddled vehicle 1 is approaching a right white line. If the second straddled-vehicle-to-traffic-lane-edge-distance D2 is equal to or less than the rider notification distance D0, the present processing proceeds to step S6. If the second straddled-vehicle-to-traffic-lane-edge-distance D2 is not less than or equal to the rider notification distance D0, the present processing returns to step S1.

In a case where the second straddled-vehicle-to-traffic-lane-edge-distance D2 is equal to or less than the rider notification distance D0, the notification determining portion 112 outputs a determination result RE indicating that the second straddled-vehicle-to-traffic-lane-edge-distance D2 is equal to or less than the rider notification distance D0 to the tactile-stimulation-actuator-control-portion 62. Based on the determination result RE, the tactile-stimulation-actuator-control-portion 62 causes the tactile stimulation actuator 70 to generate the torque Tr that has a negative value (clockwise torque Tr) (step S6). By this means the bar handle 8 is caused to rotate clockwise by the tactile stimulation actuator 70, as seen from the upward direction U. As a result, the left grip 8L imparts the pressure FLF in the frontward direction F to the left hand HL of the rider, and the right grip 8R imparts the pressure FRB in the backward direction B to the right hand HR of the rider. By this means, the rider can recognize that the straddled vehicle 1 is approaching the right white line. Thereafter, the present processing proceeds to step S7.

Next, the notification determining portion 112 determines whether or not the present processing was ended (step S7). The end of the present processing is determined based on, for example, whether or not the ignition power source was switched from "on" to "off". In a case where the ignition power source was switched from "on" to "off", the present processing ends. In a case where the ignition power source was not switched from "on" to "off", the present processing returns to step S1. Thereafter, the processing from step S1 to step S6 is repeated.

### [Effects]

According to the straddled vehicle 1 of the present embodiment, tactile stimulation can be imparted to a rider by adopting a technical concept that is different from a technical concept of imparting tactile stimulation by vibration of a general vibrator. More specifically, the bar handle 8 vibrates due to vibration of the drive source 3 such as an engine or an electric motor. Therefore, if vibration of the bar handle 8 and vibration of a general vibrator occur at the same time, it is difficult for the rider to distinguish between the vibration of the bar handle 8 and the vibration of the general vibrator.

While the rider is driving the straddled vehicle, the sensitivity of the rider with respect to a pressure received in the front-back direction FB from the bar handle 8 increases. Hence, it is easy for the rider to notice a pressure received in the frontward direction F or the backward direction B from the left grip 8L or the right grip 8R. Therefore, in the straddled vehicle 1, the tactile stimulation actuator 70 communicates information to the rider by imparting a pressure in the frontward direction F or the backward direction B as tactile stimulation to the left hand HL or the right hand HR of the rider. By this means, even if the bar handle 8 vibrates due to vibration of the drive source 3 such as an engine or an electric motor, the rider can distinguish between the vibration of the bar handle 8 and the tactile stimulation that the tactile stimulation actuator 70 generates. That is, the straddled vehicle 1 can communicate information to the rider by imparting a tactile stimulation to the rider by adopting a technical concept that is different from the technical concept of imparting a tactile stimulation by vibration of a general vibrator.

Further, according to the straddled vehicle 1, the rider can recognize by means of a tactile stimulation imparted by the tactile stimulation actuator 70 that the straddled vehicle 1 is approaching the left white line or the right white line.

### [Supplementary Description]

Note that the tactile stimulation actuator 70 of the tactile-stimulation-information-communicating-apparatus 100 may assist or counter-assist the operation of the bar handle 8 by the rider. The term "assist" refers to the tactile stimulation actuator 70 generating the torque Tr so as to make it easier for the rider to rotate the bar handle 8. Specifically, in a case where the rider rotates the bar handle 8 counterclockwise as seen from the upward direction U, the tactile-stimulation-actuator-control-portion 62 causes the tactile stimulation actuator 70 to generate the counterclockwise torque Tr (torque Tr having a positive value). In a case where the rider rotates the bar handle 8 clockwise as seen from the upward direction U, the tactile-stimulation-actuator-control-portion 62 causes the tactile stimulation actuator 70 to generate the clockwise torque Tr (torque Tr having a negative value). Further, the term "counter-assist" refers to the tactile stimulation actuator 70 generating the torque Tr so as to make it more difficult for the rider to rotate the bar handle 8. Specifically, in a case where the rider rotates the bar handle 8 counterclockwise as seen from the upward direction U, the tactile-stimulation-actuator-control-portion 62 causes the tactile stimulation actuator 70 to generate the clockwise torque Tr (torque Tr having a negative value). In a case where the rider rotates the bar handle 8 clockwise as seen from the upward direction U, the tactile-stimulation-actuator-control-portion 62 causes the tactile stimulation actuator 70 to generate the counterclockwise torque Tr (torque Tr having a positive value). However, the tactile stimulation actuator 70 need not necessarily perform an operation to assist or counter-assist the operation of the bar handle 8 by the rider.

Note that, when the straddled vehicle 1 has come close to the left white line, the tactile stimulation actuator 70 may impart the pressure FLF in the frontward direction F to the left hand HL of the rider and impart the pressure FRB in the backward direction B to the right hand HR of the rider. Similarly, when the straddled vehicle 1 has come close to the right white line, the tactile stimulation actuator 70 may impart the pressure FLB in the backward direction B to the left hand HL of the rider and impart the pressure FRF in the frontward direction F to the right hand HR of the rider.

### (Second Embodiment)

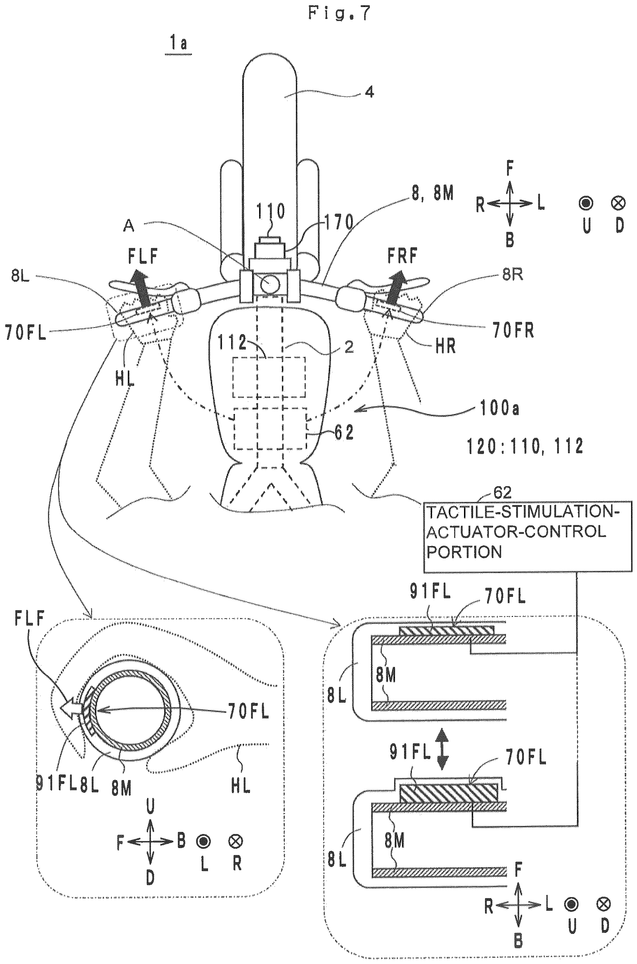

Hereunder, the overall configuration of a straddled vehicle 1a according to a second embodiment of the present teaching will be described with reference to the drawings. FIG. 7 is a multiple view drawing that includes a view of a front part of the straddled vehicle 1a according to the second embodiment as seen from the upward direction U, and a cross-sectional view of the left grip 8L. A diagram shown in the left lower part of FIG. 7 is a cross-sectional view of the left grip 8L as viewed at a cross-section perpendicular to the left-right direction LR. A diagram shown in the right lower part of FIG. 7 is a cross-sectional view of the left grip 8L as viewed at a cross-section perpendicular to the up-down direction UD.

The straddled vehicle 1a differs from the straddled vehicle 1 in the respects that the tactile stimulation actuator 70 is an actuator 170 and that the straddled vehicle 1a further includes tactile stimulation actuators 70FL and 70FR. Hereunder, the straddled vehicle 1a is described in a manner that centers of these differences.

The structure of the actuator 170 is the same as the structure of the tactile stimulation actuator 70. However, the actuator 170 is not provided in order to impart tactile stimulation to the left hand HL or the right hand HR of the rider, but rather is provided in order to assist or counter-assist operation of the bar handle 8 by the rider. Note that, since the terms "assist" and "counter-assist" have already been described above, a further description of these terms is omitted here.

Next, the tactile stimulation actuators 70FL and 70FR will be described. A tactile-stimulation-information-communicating-apparatus 100a of the straddled vehicle 1a includes the information generating portion 120, the tactile-stimulation-actuator-control-portion 62 and the tactile stimulation actuators 70FL and 70FR.

The tactile stimulation actuator 70FL imparts the pressure FLF in the frontward direction F to the left hand HL of the rider by causing the left grip 8L to deform. Therefore, the tactile stimulation actuator 70FL includes a piezoelectric element 91FL. The piezoelectric element 91FL has a planar shape having a first principal surface and a second principal surface. Further, a first electrode, which is not illustrated in the drawing, is provided on the first principal surface of the piezoelectric element 91FL. A second electrode, which is not illustrated in the drawing, is provided on the second principal surface of the piezoelectric element 91FL. The tactile-stimulation-actuator-control-portion 62 applies a voltage signal between the first electrode and the second electrode. The piezoelectric element 91FL deforms such that the space between the first principal surface and the second principal surface varies, based on the size of the voltage signal. The space between the first principal surface and the second principal surface increases as the size of the voltage signal increases.

The piezoelectric element 91FL is disposed at the left grip 8L. The piezoelectric element 91FL is disposed between the inner circumferential surface of the left grip 8L that has a cylindrical shape, and the outer circumferential surface of the left end part of the bar-handle-main-body 8M. In the present embodiment, the piezoelectric element 91FL is disposed in front of the left end part of the bar-handle-main-body 8M in the frontward direction F. By this means, the first principal surface (more precisely, the first electrode) of the piezoelectric element 91FL is in contact with the inner circumferential surface of the left grip 8L. Further, the second principal surface (more precisely, the second electrode) of the piezoelectric element 91FL is in contact with the left end part of the bar-handle-main-body 8M. Accordingly, the first principal surface and the second principal surface are aligned in the front-back direction FB. Therefore, based on a voltage signal from the tactile-stimulation-actuator-control-portion 62, the piezoelectric element 91FL deforms such that the size of the piezoelectric element 91FL in the front-back direction FB changes. By the change in shape of the piezoelectric element 91FL, the tactile stimulation actuator 70FL causes the left grip 8L to deform such that the left grip 8L protrudes in the frontward direction F. By this means, the left grip 8L imparts the pressure FLF in the frontward direction F to the left hand HL of the rider.

The tactile stimulation actuator 70FR imparts the pressure FRF in the frontward direction F to the right hand HR of the rider by causing the right grip 8R to deform. The structure of the tactile stimulation actuator 70RL is the same as the structure of the tactile stimulation actuator 70FL, and therefore a description thereof will be omitted here. The remaining structure of the straddled vehicle 1a is the same as the straddled vehicle 1, and therefore a description thereof will be omitted here.

Next, operations of the tactile-stimulation-infonnation-communicating-apparatus 100a will be described. The operations of the tactile-stimulation-information-communicating-apparatus 100a of the straddled vehicle 1a differ from the operations of the tactile-stimulation-information-communicating-apparatus 100 only with respect to steps S4 and S6 in FIG. 6. Therefore, steps S4 and S6 are described hereunder, and a description of the other steps is omitted.

In step S4 of the operations performed by the straddled vehicle 1, based on the determination result RE, the tactile-stimulation-actuator-control-portion 62 causes the tactile stimulation actuator 70 to generate the torque Tr having a positive value (counterclockwise torque Tr). The determination result RE indicates that the first straddled-vehicle-to-traffic-lane-edge-distance D1 is equal to or less than the rider notification distance D0. In contrast, in step S4 of the operations performed by the straddled vehicle 1a, based on the determination result RE, the tactile-stimulation-actuator-control-portion 62 outputs a voltage signal to the tactile stimulation actuator 70FL such that the tactile stimulation actuator 70FL imparts the pressure FLF in the frontward direction F to the left hand HL of the rider. By this means, the rider can recognize that the straddled vehicle 1a is approaching the left white line.

Further, in step S6 of the operations performed by the straddled vehicle 1, based on the determination result RE, the tactile-stimulation-actuator-control-portion 62 causes the tactile stimulation actuator 70 to generate the torque Tr having a negative value (clockwise torque Tr). The determination result RE indicates that the second straddled-vehicle-to-traffic-lane-edge-distance D2 is equal to or less than the rider notification distance D0. In contrast, in step S6 of the operations performed by the straddled vehicle 1a, based on the determination result RE, the tactile-stimulation-actuator-control-portion 62 outputs a voltage signal to the tactile stimulation actuator 70FR such that the tactile stimulation actuator 70FR imparts the pressure FRF in the frontward direction F to the right hand HR of the rider. By this means, the rider can recognize that the straddled vehicle 1a is approaching the right white line.

According to the straddled vehicle 1a, for the same reasons as the reasons with respect to the straddled vehicle 1, tactile stimulation can be imparted to the rider by adopting a technical concept that is different from a technical concept of imparting tactile stimulation by vibration of a general vibrator.

Further, according to the straddled vehicle 1a, for the same reasons as the reasons with respect to the straddled vehicle 1, the rider can recognize by means of a tactile stimulation imparted by the tactile stimulation actuator 70 that the straddled vehicle 1a is approaching the left white line or the right white line.

Note that, the tactile-stimulation-information-communicating-apparatus 100a performs the operations in the following (1) or (2).
(1) The tactile stimulation actuator 70FL imparts the pressure FLF in the frontward direction F to the left hand HL of the rider by means of the left grip 8L, and the tactile stimulation actuator 70FR does not impart a pressure to the right hand HR of the rider by means of the right grip 8R.
(2) The tactile stimulation actuator 70FR imparts the pressure FRF in the frontward direction F to the right hand HR of the rider by means of the right grip 8R, and the tactile stimulation actuator 70FL does not impart a pressure to the left hand HL of the rider by means of the left grip 8L.

However, operations of the tactile-stimulation-information-communicating-apparatus 100a are not limited to the operations of (1) or (2). The tactile stimulation actuator 70FL may impart the pressure FLF in the frontward direction F to the left hand HL of the rider by means of the left grip 8L, and the tactile stimulation actuator 70FR may impart the pressure FRF in the frontward direction F to the right hand HR of the rider by means of the right grip 8R. At such time, the tactile stimulation actuator 70 may notify the rider which white line the straddled vehicle 1a is approaching among the left white line and the right white line by causing a difference to arise between the size of the pressure FRF and the size of the pressure FLF. However, the size of the pressure FRF and the size of the pressure FLF may be equal.

### [First Modification]

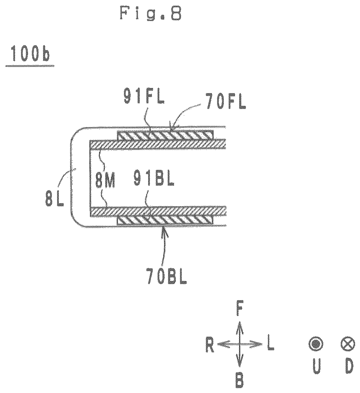

Hereunder, a tactile-stimulation-information-communicating-apparatus 100b according to a first modification is described with reference to the drawings. FIG. 8 is a cross-sectional view of a left grip 8L of the tactile-stimulation-information-communicating-apparatus 100b at a cross-section perpendicular to the up-down direction UD.

The straddled vehicle 1a (not illustrated in FIG. 8) includes the tactile-stimulation-information-communicating-apparatus 100b in place of the tactile-stimulation-information-communicating-apparatus 100a. The tactile-stimulation-information-communicating-apparatus 100b includes the information generating portion 120 (not illustrated in FIG. 8), the tactile-stimulation-actuator-control-portion 62 (not illustrated in FIG. 8) and tactile stimulation actuators 70FL, 70BL, 70FR and 70BR (the tactile stimulation actuators 70FR and 70BR are not illustrated in FIG. 8). The tactile stimulation actuator 70FL of the tactile-stimulation-information-communicating-apparatus 100b is the same as the tactile stimulation actuator 70FL of the tactile-stimulation-information-communicating-apparatus 100a, and therefore a description thereof will be omitted here.

The tactile stimulation actuator 70BL imparts the pressure FLB in the backward direction B to the left hand HL of the rider by causing the left grip 8L to deform. Therefore, the tactile stimulation actuator 70BL includes a piezoelectric element 91BL. The structure of the piezoelectric element 91BL is the same as the structure of the piezoelectric element 91FL, and hence a description thereof will be omitted here.

The piezoelectric element 91BL is disposed at the left grip 8L. The piezoelectric element 91BL is disposed between the inner circumferential surface of the left grip 8L that has a cylindrical shape, and the left end part of the bar-handle-main-body 8M. In the present embodiment, the piezoelectric element 91BL is disposed behind the left end part of the bar-handle-main-body 8M in the backward direction B. By this means, the first principal surface (more precisely, the first electrode) of the piezoelectric element 91BL is in contact with the inner circumference of the left grip 8L. Further, the second principal surface (more precisely, the second electrode) of the piezoelectric element 91BL is in contact with the left end part of the bar-handle-main-body 8M. Accordingly, the first principal surface and the second principal surface are aligned in the front-back direction FB. Therefore, based on a voltage signal from the tactile-stimulation-actuator-control-portion 62, the piezoelectric element 91BL deforms such that the size of the piezoelectric element 91BL in the front-back direction FB changes. By the change in shape of the piezoelectric element 91BL, the tactile stimulation actuator 70BL causes the left grip 8L to deform such that the left grip 8L protrudes in the backward direction B. By this means, the left grip 8L imparts the pressure FLB in the frontward direction B to the left hand HL of the rider.

The tactile stimulation actuator 70FR of the tactile-stimulation-information-communicating-apparatus 100b is the same as the tactile stimulation actuator 70FR of the tactile-stimulation-information-communicating-apparatus 100a, and hence a description thereof will be omitted here. Further, the tactile stimulation actuator 70BR imparts the pressure FRB in the backward direction B to the rider by causing the right grip 8R to deform. The structure of the tactile stimulation actuator 70BR is the same as the structure of the tactile stimulation actuator 70BL, and therefore a description thereof will be omitted here.

Next, operations of the tactile-stimulation-information-communicating-apparatus 100b will be described. The operations of the tactile-stimulation-information-communicating-apparatus 100b differ from the operations of the tactile-stimulation-information-communicating-apparatus 100a only with respect to steps S4 and S6 in FIG. 6. Therefore, steps S4 and S6 are described hereunder, and a description of the other steps is omitted.

In step S4 of the operations performed by the straddled vehicle 1a that includes the tactile-stimulation-information-communicating-apparatus 100a, based on the determination result RE, the tactile-stimulation-actuator-control-portion 62 outputs a voltage signal to the tactile stimulation actuator 70FL such that the tactile stimulation actuator 70FL imparts the pressure FLF in the frontward direction F to the left hand HL of the rider. The determination result RE indicates that the first straddled-vehicle-to-traffic-lane-edge-distance D1 is equal to or less than the rider notification distance D0. In contrast, in step S4 of the operations performed by the straddled vehicle 1a that includes the tactile-stimulation-information-communicating-apparatus 100b, based on the determination result RE, the tactile-stimulation-actuator-control-portion 62 outputs a voltage signal to the tactile stimulation actuator 70BL such that the tactile stimulation actuator 70BL imparts the pressure FLB in the backward direction B to the left hand HL of the rider, and also outputs a voltage signal to the tactile stimulation actuator 70FR such that the tactile stimulation actuator 70FR imparts the pressure FRF in the frontward direction F to the right hand HR of the rider. By this means, the rider can recognize that the straddled vehicle 1a (not illustrated in FIG. 8) is approaching the left white line.

In step S6 of the operations performed by the straddled vehicle 1a that includes the tactile-stimulation-information-communicating-apparatus 100a, based on the determination result RE, the tactile-stimulation-actuator-control-portion 62 outputs a voltage signal to the tactile stimulation actuator 70FR such that the tactile stimulation actuator 70FR imparts the pressure FRF in the frontward direction F to the right hand HR of the rider. The determination result RE indicates that the second straddled-vehicle-to-traffic-lane-edge-distance D2 is equal to or less than the rider notification distance D0. In contrast, in step S6 of the operations performed by the straddled vehicle 1a that includes the tactile-stimulation-information-communicating-apparatus 100b, based on the determination result RE, the tactile-stimulation-actuator-control-portion 62 outputs a voltage signal to the tactile stimulation actuator 70BR such that the tactile stimulation actuator 70BR imparts the pressure FRB in the backward direction B to the right hand HR of the rider, and also outputs a voltage signal to the tactile stimulation actuator 70FL such that the tactile stimulation actuator 70FL imparts the pressure FLF in the frontward direction F to the left hand HL of the rider. By this means, the rider can recognize that the straddled vehicle 1a (not illustrated in FIG. 8) is approaching the right white line.

According to the straddled vehicle 1a including the tactile-stimulation-information-communicating-apparatus 100b, for the same reasons as the reasons with respect to the straddled vehicle 1a including the tactile-stimulation-information-communicating-apparatus 100a, tactile stimulation can be imparted to the rider by adopting a technical concept that is different from a technical concept of imparting tactile stimulation by vibration of a general vibrator.

Further, according to the straddled vehicle 1a including the tactile-stimulation-information-communicating-apparatus 100b, for the same reasons as the reasons with respect to the straddled vehicle 1a including the tactile-stimulation-information-communicating-apparatus 100a, the rider can recognize by means of tactile stimulation imparted by the tactile stimulation actuators 70FL, 70BL, 70FR and 70BR that the straddled vehicle 1a is approaching the left white line or the right white line.

Note that, the tactile-stimulation-information-communicating-apparatus 100b performs the operations in the following (3) or (4).
(3) The tactile stimulation actuator 70BL imparts the pressure FLB in the backward direction B to the left hand HL of the rider by means of the left grip 8L, and the tactile stimulation actuator 70FR imparts the pressure FRF in the frontward direction F to the right hand HR of the rider by means of the right grip 8R. At such time, the tactile stimulation actuator 70FL does not impart a pressure to the left hand HL of the rider by means of the left grip 8L, and the tactile stimulation actuator 70BR does not impart a pressure to the right hand HR of the rider by means of the right grip 8R. (4) The tactile stimulation actuator 70BR imparts the pressure FRB in the backward direction B to the right hand HR of the rider by means of the right grip 8R, and the tactile stimulation actuator 70FL imparts the pressure FLF in the frontward direction F to the left hand HL of the rider by means of the left grip 8L. At such time, the tactile stimulation actuator 70FR does not impart a pressure to the right hand HR of the rider by means of the right grip 8R, and the tactile stimulation actuator 70BL does not impart a pressure to the left hand HL of the rider by means of the left grip 8L.

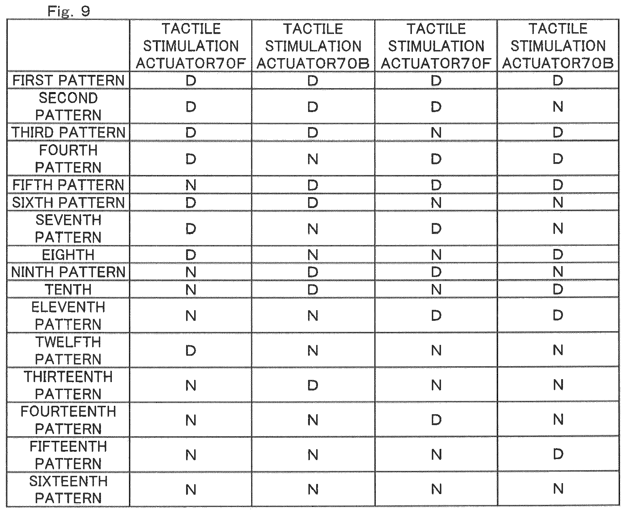

However, operations of the tactile-stimulation-information-communicating-apparatus 100b are not limited to the operations of (3) or (4). FIG. 9 is a table showing operations of the tactile-stimulation-information-communicating-apparatus 100b. In FIG. 9, the character "D" denotes a state in which the respective tactile stimulation actuators 70FL, 70BL, 70FR and 70BR are imparting a pressure. The character "N" denotes a state in which the respective tactile stimulation actuators 70FL, 70BL, 70FR and 70BR are not imparting a pressure. By having the four tactile stimulation actuators 70FL, 70BL, 70FR and 70BR, the tactile-stimulation-information-communicating-apparatus 100b can perform 16 kinds of operations as a first pattern to a sixteenth pattern. Thus, the tactile-stimulation-information-communicating-apparatus 100b can communicate many kinds (16 kinds) of information to the rider.

### [Second Modification]

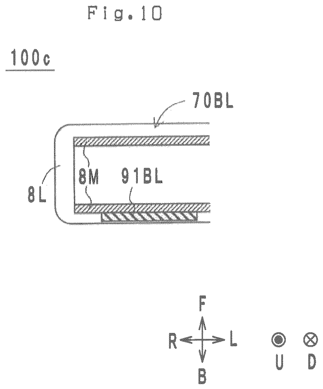

Hereunder, a tactile-stimulation-information-communicating-apparatus 100c according to a second modification is described with reference to the drawings. FIG. 10 is a cross-sectional view of a left grip 8L of the tactile-stimulation-information-communicating-apparatus 100c at a cross-section perpendicular to the up-down direction UD.

The straddled vehicle 1a (not illustrated in FIG. 10) includes the tactile-stimulation-information-communicating-apparatus 100c in place of the tactile-stimulation-information-communicating-apparatus 100b. The tactile-stimulation-information-communicating-apparatus 100c includes the information generating portion 120 (not illustrated in FIG. 10), the tactile-stimulation-actuator-control-portion 62 (not illustrated in FIG. 10) and tactile stimulation actuators 70BL and 70BR (the tactile stimulation actuator 70BR is not illustrated in FIG. 10). The tactile stimulation actuators 70BL and 70BR of the tactile-stimulation-information-communicating-apparatus 100c are the same as the tactile stimulation actuators 70BL and 70BR of the tactile-stimulation-information-communicating-apparatus 100b, and hence a description thereof will be omitted here.

Next, operations of the tactile-stimulation-information-communicating-apparatus 100c will be described. The operations of the tactile-stimulation-information-communicating-apparatus 100c differ from the operations of the tactile-stimulation-information-communicating-apparatus 100b only with respect to steps S4 and S6 in FIG. 6. Therefore, steps S4 and S6 are described hereunder, and a description of the other steps is omitted.

In step S4 of the operations performed by the straddled vehicle 1a that includes the tactile-stimulation-information-communicating-apparatus 100b, based on the determination result RE, the tactile-stimulation-actuator-control-portion 62 outputs a voltage signal to the tactile stimulation actuator 70BL such that the tactile stimulation actuator 70BL imparts the pressure FLB in the backward direction B to the left hand HL of the rider, and outputs a voltage signal to the tactile stimulation actuator 70FR such that the tactile stimulation actuator 70FR imparts the pressure FRF in the frontward direction F to the right hand HR of the rider. The determination result RE indicates that the first straddled-vehicle-to-traffic-lane-edge-distance D1 is equal to or less than the rider notification distance D0. In contrast, in step S4 of the operations performed by the straddled vehicle 1a that includes the tactile-stimulation-information-communicating-apparatus 100c, based on the determination result RE, the tactile-stimulation-actuator-control-portion 62 outputs a voltage signal to the tactile stimulation actuator 70BL such that the tactile stimulation actuator 70BL imparts the pressure FLB in the backward direction B to the left hand HL of the rider. By this means, the rider can recognize that the straddled vehicle 1a (not illustrated in FIG. 10) is approaching the left white line.

In step S6 of the operations performed by the straddled vehicle 1a that includes the tactile-stimulation-information-communicating-apparatus 100b, based on the determination result RE, the tactile-stimulation-actuator-control-portion 62 outputs a voltage signal to the tactile stimulation actuator 70BR such that the tactile stimulation actuator 70BR imparts the pressure FRB in the backward direction B to the right hand HR of the rider, and outputs a voltage signal to the tactile stimulation actuator 70FL such that the tactile stimulation actuator 70FL imparts the pressure FLF in the frontward direction F to the left hand HL of the rider. The determination result RE indicates that the second straddled-vehicle-to-traffic-lane-edge-distance D2 is equal to or less than the rider notification distance D0. In contrast, in step S6 of the operations performed by the straddled vehicle 1a that includes the tactile-stimulation-information-communicating-apparatus 100c, based on the determination result RE, the tactile-stimulation-actuator-control-portion 62 outputs a voltage signal to the tactile stimulation actuator 70BR such that the tactile stimulation actuator 70BR imparts the pressure FRB in the backward direction B to the right hand HR of the rider. By this means, the rider can recognize that the straddled vehicle 1a (not illustrated in FIG. 10) is approaching the right white line.

According to the straddled vehicle 1a including the tactile-stimulation-information-communicating-apparatus 100c, for the same reasons as the reasons with respect to the straddled vehicle 1a including the tactile-stimulation-information-communicating-apparatus 100b, tactile stimulation can be imparted to the rider by adopting a technical concept that is different from a technical concept of imparting tactile stimulation by vibration of a general vibrator.

Further, according to the straddled vehicle 1a including the tactile-stimulation-information-communicating-apparatus 100c, for the same reasons as the reasons with respect to the straddled vehicle 1a including the tactile-stimulation-information-communicating-apparatus 100b, the rider can recognize by means of tactile stimulation imparted by the tactile stimulation actuators 70BL and 70BR that the straddled vehicle 1a is approaching the left white line or the right white line.

Note that, the tactile-stimulation-information-communicating-apparatus 100c performs the operations in the following (5) or (6).
(5) The tactile stimulation actuator 70BL imparts the pressure FLB in the backward direction B to the left hand HL of the rider by means of the left grip 8L, and the tactile stimulation actuator 70BR does not impart a pressure to the right hand HR of the rider by means of the right grip 8R.
(6) The tactile stimulation actuator 70BR imparts the pressure FRB in the backward direction B to the right hand HR of the rider by means of the right grip 8R, and the tactile stimulation actuator 70BL does not impart a pressure to the left hand HL of the rider by means of the left grip 8L.

However, operations of the tactile-stimulation-information-communicating-apparatus 100c are not limited to the operations of (5) or (6). The tactile stimulation actuator 70BL may impart the pressure FLB in the backward direction B to the left hand HL of the rider by means of the left grip 8L, and the tactile stimulation actuator 70BR may impart the pressure FRB in the backward direction B to the right hand HR of the rider by means of the right grip 8R. At such time, the tactile stimulation actuator 70 may notify the rider which white line the straddled vehicle 1a is approaching among the left white line and the right white line by causing a difference to arise between the size of the pressure FRB and the size of the pressure FLB. However, the size of the pressure FRB and the size of the pressure FLB may be equal.

### [Third Modification]

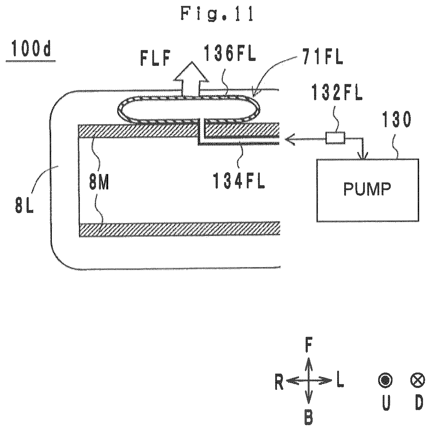

Hereunder, a tactile-stimulation-information-communicating-apparatus 100d according to a third modification will be described with reference to the drawings. FIG. 11 is a cross-sectional view of the left grip 8L of the tactile-stimulation-information-communicating-apparatus 100d at a cross-section perpendicular to the up-down direction UD.

The straddled vehicle 1a (not illustrated in FIG. 11) includes the tactile-stimulation-information-communicating-apparatus 100d in place of the tactile-stimulation-information-communicating-apparatus 100a. The tactile-stimulation-information-communicating-apparatus 100d includes the information generating portion 120 (not illustrated in FIG. 11), the tactile-stimulation-actuator-control-portion 62 (not illustrated in FIG. 11), and tactile stimulation actuators 71FL and 71FR (the tactile stimulation actuator 71FR is not illustrated in FIG. 11).

The tactile stimulation actuator 71FL imparts the pressure FLF in the frontward direction F to the left hand HL of the rider by causing the left grip 8L to deform. Therefore, the tactile stimulation actuator 71FL includes a pump 130, a valve 132FL, an air pipe 134FL and a balloon 136FL.

The balloon 136FL is disposed at the left grip 8L. The balloon 136FL is disposed between the inner circumferential surface of the left grip 8L having a cylindrical shape and the left end part of the bar-handle-main-body 8M. In the present embodiment, the balloon 136FL is disposed in front of the left end part of the bar-handle-main-body 8M in the frontward direction F. The balloon 136FL is a sack body that can contain a fluid that is a gas or a liquid. In the present embodiment the fluid is air. The balloon 136FL can expand and contract. Hence, the material of the balloon 136FL is an elastic body material such as rubber or resin.

The pump 130 injects a fluid (in the present embodiment, air) into the balloon 136FL. The pump 130 may be driven by the drive source 3, or may be driven by an electric motor or the like provided in the pump 130.

The air pipe 134FL is a pipe that connects the pump 130 and the balloon 136FL. The air pipe 134FL is a conduit that air discharged by the pump 130 passes through. The valve 132FL is provided in the air pipe 134FL. The valve 132FL adjusts the amount of air that flows into the balloon 136FL and the amount of air that flows out from the balloon 136FL based on control by the tactile-stimulation-actuator-control-portion 62. By this means, the balloon 136FL expands and contracts.

When the balloon 136FL expands and contracts, the balloon 136FL deforms such that the size in the front-back direction FB of the balloon 136FL changes. By causing the balloon 136FL to expand, the tactile stimulation actuator 71FL causes the left grip 8L to deform such that the left grip 8L protrudes in the frontward direction F. By this means, the left grip 8L imparts the pressure FLF in the frontward direction F to the left hand HL of the rider.

By causing the right grip 8R to deform, the tactile stimulation actuator 71FR imparts the pressure FRF in the frontward direction F to the right hand HR of the rider. The configuration of the tactile stimulation actuator 71FR is the same as the configuration of the tactile stimulation actuator 71FL, and hence a description thereof will be omitted here.

The operations of the tactile-stimulation-information-communicating-apparatus 100d are the same as the operations of the tactile-stimulation-information-communicating-apparatus 100a, and therefore a description of the operations will be omitted here.

According to the straddled vehicle 1a including the tactile-stimulation-information-communicating-apparatus 100d, for the same reasons as the reasons with respect to the straddled vehicle 1a including the tactile-stimulation-information-communicating-apparatus 100a, tactile stimulation can be imparted to the rider by adopting a technical concept that is different from a technical concept of imparting tactile stimulation by vibration of a general vibrator.

Further, according to the straddled vehicle 1a including the tactile-stimulation-infonnation-communicating-apparatus 100d, for the same reasons as the reasons with respect to the straddled vehicle 1a including the tactile-stimulation-information-communicating-apparatus 100a, the rider can recognize by means of tactile stimulation imparted by the tactile stimulation actuators 71FL and 71FR that the straddled vehicle 1a is approaching the left white line or the right white line.

Note that, the tactile-stimulation-information-communicating-apparatus 100d performs the operations in the following (7) or (8).
(7) The tactile stimulation actuator 71FL imparts the pressure FLF in the frontward direction F to the left hand HL of the rider by means of the left grip 8L, and the tactile stimulation actuator 71 FR does not impart a pressure to the right hand HR of the rider by means of the right grip 8R.
(8) The tactile stimulation actuator 71FR imparts the pressure FRF in the frontward direction F to the right hand HR of the rider by means of the right grip 8R, and the tactile stimulation actuator 71FL does not impart a pressure to the left hand HL of the rider by means of the left grip 8L.

However, operations of the tactile-stimulation-information-communicating-apparatus 100d are not limited to the operations of (7) or (8). The tactile stimulation actuator 71FL may impart the pressure FLF in the frontward direction F to the left hand HL of the rider by means of the left grip 8L, and the tactile stimulation actuator 71FR may impart the pressure FRF in the frontward direction F to the right hand HR of the rider by means of the right grip 8R. At such time, the tactile stimulation actuators 71FL and 71FR may notify the rider which white line the straddled vehicle 1a is approaching among the left white line and the right white line by causing a difference to arise between the size of the pressure FRF and the size of the pressure FLF. However, the size of the pressure FRF and the size of the pressure FLF may be equal.

### [Fourth Modification]

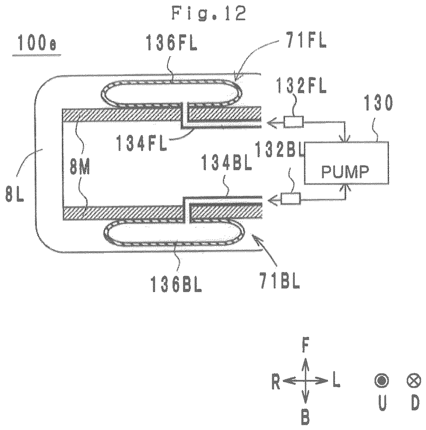

Hereunder, a tactile-stimulation-information-communicating-apparatus 100e according to a fourth modification is described with reference to the drawings. FIG. 12 is a cross-sectional view of a left grip 8L of the tactile-stimulation-information-communicating-apparatus 100e at a cross-section perpendicular to the up-down direction UD.

The straddled vehicle 1a (not illustrated in FIG. 12) includes the tactile-stimulation-information-communicating-apparatus 100e in place of the tactile-stimulation-information-communicating-apparatus 100b. The tactile-stimulation-information-communicating-apparatus 100e includes the information generating portion 120 (not illustrated in FIG. 12), the tactile-stimulation-actuator-control-portion 62 (not illustrated in FIG. 12) and tactile stimulation actuators 71FL, 71BL, 71FR and 71BR (the tactile stimulation actuators 71FR and 71BR are not illustrated in FIG. 12). The tactile stimulation actuator 71FL of the tactile-stimulation-information-communicating-apparatus 100e is the same as the tactile stimulation actuator 71FL of the tactile-stimulation-information-communicating-apparatus 100d, and therefore a description thereof will be omitted here.

The tactile stimulation actuator 71BL imparts the pressure FLB in the backward direction B to the left hand HL of the rider by causing the left grip 8L to deform. Therefore, the tactile stimulation actuator 71BL includes the pump 130, a valve 132BL, an air pipe 134BL and a balloon 136BL. The structure of the balloon 136BL is the same as the structure of the balloon 136FL, and therefore a description thereof will be omitted here. The structure of the valve 132BL is the same as the structure of the valve 132FL, and therefore a description thereof will be omitted here. The structure of the air pipe 134BL is the same as the structure of the air pipe 134FL, and therefore a description thereof will be omitted here.

The balloon 136BL is disposed at the left grip 8L. The balloon 136BL is disposed between the inner circumferential surface of the left grip 8L having a cylindrical shape and the left end part of the bar-handle-main-body 8M. In the present embodiment, the balloon 136BL is disposed behind the left end part of the bar-handle-main-body 8M in the backward direction B.

The pump 130 injects a fluid (in the present embodiment, air) into the balloon 136BL. The pump 130 may be driven by the drive source 3, or may be driven by an electric motor or the like provided in the pump 130.

When the balloon 136BL expands and contracts, the balloon 136BL deforms such that the size in the front-back direction FB of the balloon 136BL changes. By causing the balloon 136BL to expand, the tactile stimulation actuator 71BL causes the left grip 8L to deform such that the left grip 8L protrudes in the backward direction B. By this means, the left grip 8L imparts the pressure FLB in the backward direction B to the left hand HL of the rider.

The tactile stimulation actuator 71FR of the tactile-stimulation-information-communicating-apparatus 100e is the same as the tactile stimulation actuator 71FR of the tactile-stimulation-information-communicating-apparatus 100d, and hence a description thereof will be omitted here. Further, the tactile stimulation actuator 71BR imparts the pressure FRB in the backward direction B to the rider by causing the right grip 8R to deform. The structure of the tactile stimulation actuator 71BR is the same as the structure of the tactile stimulation actuator 71BL, and hence a description thereof will be omitted here.

The operations of the tactile-stimulation-information-communicating-apparatus 100e are the same as the operations of the tactile-stimulation-information-communicating-apparatus 100b, and therefore a description of the operations will be omitted here.

According to the straddled vehicle 1a including the tactile-stimulation-information-communicating-apparatus 100e, for the same reasons as the reasons with respect to the straddled vehicle 1a including the tactile-stimulation-information-communicating-apparatus 100b, tactile stimulation can be imparted to the rider by adopting a technical concept that is different from a technical concept of imparting tactile stimulation by vibration of a general vibrator.

Further, according to the straddled vehicle 1a including the tactile-stimulation-information-communicating-apparatus 100e, for the same reasons as the reasons with respect to the straddled vehicle 1a including the tactile-stimulation-information-communicating-apparatus 100b, the rider can recognize by means of tactile stimulation imparted by the tactile stimulation actuators 71FL, 71BL, 71FR and 71BR that the straddled vehicle 1a is approaching the left white line or the right white line.

Further, according to the straddled vehicle 1a including the tactile-stimulation-information-communicating-apparatus 100e, for the same reasons as the reasons with respect to the straddled vehicle 1a including the tactile-stimulation-information-communicating-apparatus 100b, many kinds (16 kinds) of information can be communicated to the rider.

### [Fifth Modification]

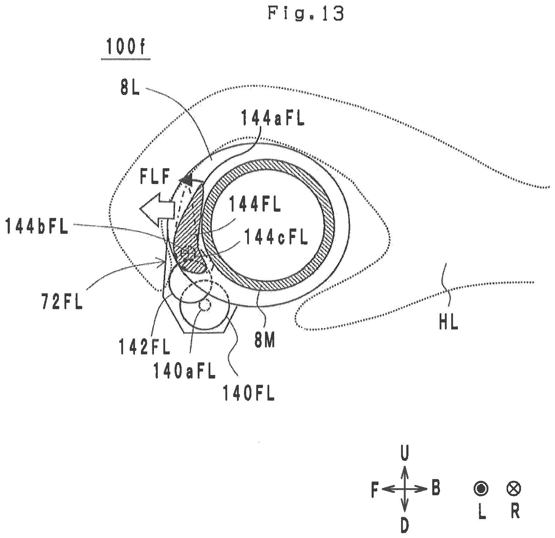

Hereunder, a tactile-stimulation-information-communicating-apparatus 100f according to a fifth modification is described with reference to the drawings. FIG. 13 is a cross-sectional view of a left grip 8L of the tactile-stimulation-information-communicating-apparatus 1 00f at a cross-section perpendicular to the left-right direction LR.

The straddled vehicle 1a (not illustrated in FIG. 13) includes the tactile-stimulation-information-communicating-apparatus 100f in place of the tactile-stimulation-information-communicating-apparatus 100a. The tactile-stimulation-information-communicating-apparatus 100f includes the information generating portion 120 (not illustrated in FIG. 13), the tactile-stimulation-actuator-control-portion 62 (not illustrated in FIG. 13), and tactile stimulation actuators 72FL and 72FR (the tactile stimulation actuator 72FR is not illustrated in FIG. 13).

The tactile stimulation actuator 72FL imparts the pressure FLF in the frontward direction F to the left hand HL of the rider by causing the left grip 8L to deform. Therefore, the tactile stimulation actuator 72FL includes an actuator main body 140FL, a gear 142FL and a cam 144FL.

The cam 144FL includes a cam main body 144aFL, a shaft 144bFL and a gear 144cFL. The cam main body 144aFL has a plate shape that extends in the left-right direction LR. The shaft 144bFL extends in the left-right direction LR at a lower part of the cam main body 144aFL. The shaft 144bFL is supported by the left grip 8L or the left end part of the bar-handle-main-body 8M. By this means, the cam 144FL can rotate about the shaft 144bFL. The gear 144cFL is formed at the periphery of the shaft 144bFL.

The actuator main body 140FL is an electric motor. The actuator main body 140FL generates a torque when the actuator main body 140FL receives a supply of electric power. The actuator main body 140FL includes an output shaft 140aFL. The output shaft 140aFL is caused to rotate when a torque is generated by the actuator main body 140FL. In the gear 142FL, the gear 144cFL and a pinion gear (not illustrated) of the output shaft 140aFL are engaged with each other. The gear 142FL reduces the speed of rotation of the output shaft 140aFL of the actuator main body 140FL, and transmits the rotation to the shaft 144bFL. By this means, as seen from the leftward direction L, when the output shaft 140aFL of the actuator main body 140FL rotates counterclockwise, the cam 144FL rotates counterclockwise about the shaft 144bFL. Further, as seen from the leftward direction L, when the output shaft 140aFL of the actuator main body 140FL rotates clockwise, the cam 144FL rotates clockwise about the shaft 144bFL.

The tactile stimulation actuator 72FL configured as described above (that is, the tactile stimulation actuator 72FL is the actuator main body 140FL, the gear 142FL and the cam 144FL) is disposed at the left grip 8L. The cam 144FL is disposed between the inner circumferential surface of the left grip 8L that has a cylindrical shape and the left end part of the bar-handle-main-body 8M. In the present embodiment, the cam 144FL is disposed in front of the left end part of the bar-handle-main-body 8M in the frontward direction F. The cam main body 144aFL has a plate shape that includes a third principal surface and a fourth principal surface. Thus, the tactile stimulation actuator 72FL can perform the following operations.

Based on control by the tactile-stimulation-actuator-control-portion 62, the actuator main body 140FL causes the output shaft 140aFL to rotate counterclockwise as seen from the leftward direction L. By this means, the cam 144FL rotates counterclockwise about the shaft 144bFL. As a result, by rotation of the cam 144FL, the tactile stimulation actuator 72FL causes the left grip 8L to deform such that the left grip 8L protrudes in the frontward direction F. By this means, the left grip 8L imparts the pressure FLF in the frontward direction F to the left hand HL of the rider.

The tactile stimulation actuator 72FR imparts the pressure FRF in the frontward direction F to the right hand HR of the rider by causing the right grip 8R to deform. The structure of the tactile stimulation actuator 72RL is the same as the structure of the tactile stimulation actuator 72FL, and therefore a description thereof will be omitted here.

The operations of the tactile-stimulation-information-communicating-apparatus 100f are the same as the operations of the tactile-stimulation-information-communicating-apparatus 100a, and therefore a description of the operations will be omitted here.

According to the straddled vehicle 1a including the tactile-stimulation-information-communicating-apparatus 100f, for the same reasons as the reasons with respect to the straddled vehicle 1a including the tactile-stimulation-information-communicating-apparatus 100a, tactile stimulation can be imparted to the rider by adopting a technical concept that is different from a technical concept of imparting tactile stimulation by vibration of a general vibrator.

Further, according to the straddled vehicle 1a including the tactile-stimulation-information-communicating-apparatus 100f, for the same reasons as the reasons with respect to the straddled vehicle 1a including the tactile-stimulation-information-communicating-apparatus 100a, the rider can recognize by means of tactile stimulation imparted by the tactile stimulation actuators 72FL and 72FR that the straddled vehicle 1a is approaching the left white line or the right white line.

Note that, the tactile-stimulation-information-communicating-apparatus 100f performs the operations in the following (9) or (10).
(9) The tactile stimulation actuator 72FL imparts the pressure FLF in the frontward direction F to the left hand HL of the rider by means of the left grip 8L, and the tactile stimulation actuator 72FR does not impart a pressure to the right hand HR of the rider by means of the right grip 8R.
(10) The tactile stimulation actuator 72FR imparts the pressure FRF in the frontward direction F to the right hand HR of the rider by means of the right grip 8R, and the tactile stimulation actuator 72FL does not impart a pressure to the left hand HL of the rider by means of the left grip 8L.

However, operations of the tactile-stimulation-information-communicating-apparatus 100f are not limited to the operations of (9) or (10). The tactile stimulation actuator 72FL may impart the pressure FLF in the frontward direction F to the left hand HL of the rider by means of the left grip 8L, and the tactile stimulation actuator 72FR may impart the pressure FRF in the frontward direction F to the right hand HR of the rider by means of the right grip 8R. At such time, the tactile stimulation actuators 72FL and 72FR may notify the rider which white line the straddled vehicle 1a is approaching among the left white line and the right white line by causing a difference to arise between the size of the pressure FRF and the size of the pressure FLF. However, the size of the pressure FRF and the size of the pressure FLF may be equal.

Note that the tactile-stimulation-information-communicating-apparatus 100f may further include tactile stimulation actuators 72BL and 72BR. The tactile stimulation actuator 72BL includes a cam 144BL (not illustrated). The tactile stimulation actuator 72BL imparts the pressure FLB in the backward direction B to the left hand HL of the rider by means of the left grip 8L by rotation of the cam 144BL. The tactile stimulation actuator 72BR includes a cam 144BR (not illustrated). The tactile stimulation actuator 72BR imparts the pressure FRB in the backward direction B to the right hand HR of the rider by means of the right grip 8R by rotation of the cam 144BR.

Note that, the tactile-stimulation-information-communicating-apparatus 100f may include the tactile stimulation actuators 72BL and 72BR, without including the tactile stimulation actuators 72FL and 72FR.

### [Supplementary Description]

In the tactile-stimulation-information-communicating-apparatuses 100a to 100f, the piezoelectric elements 91FL and 91BL, the balloons 136FL and 136BL and the cams 144FL and 144BL are provided inside the left grip 8L. However, the piezoelectric elements 91FL and 91BL, the balloons 136FL and 136BL and the cams 144FL and 144BL may be provided outside the left grip 8L. By this means, the tactile stimulation actuators 70FL, 70BL, 71FL, 71BL, 72FL and 72BL impart the pressures FLF and FLB directly to the left hand HL of the rider. Further, the piezoelectric elements 91FR and 91BR, the balloons 136FR and 136BR, and the cams 144FR and 144BR are provided inside the right grip 8R. However, the piezoelectric elements 91FR and 91BR, the balloons 136FR and 136BR, and the cams 144FR and 144BR may be provided outside the right grip 8R. By this means, the tactile stimulation actuators 70FR, 70BR, 71FR, 71BR, 72FR and 72BR impart the pressures FRF and FRB directly to the right hand HR of the rider.

The left grip 8L may have a laminated structure including a plurality of layers. In this case, the piezoelectric elements 91FL and 91BL, the balloons 136FL and 136BL and the cams 144FL and 144BL may be provided between layers of the left grip 8L. Further, the right grip 8R may have a laminated structure including a plurality of layers. In this case, the piezoelectric elements 91FR and 91BR, the balloons 136FR and 136BR, and the cams 144FR and 144BR may be provided between layers of the right grip 8R.

### (Examples of arrangement of tactile stimulation actuators)

Hereunder, examples of the arrangement of the tactile stimulation actuators 70FL, 70BL, 70FR, 70BR, 71FL, 71BL, 71FR, 71BR, 72FL, 72BL, 72FR and 72BR are described with reference to the drawings.

### [First arrangement example]

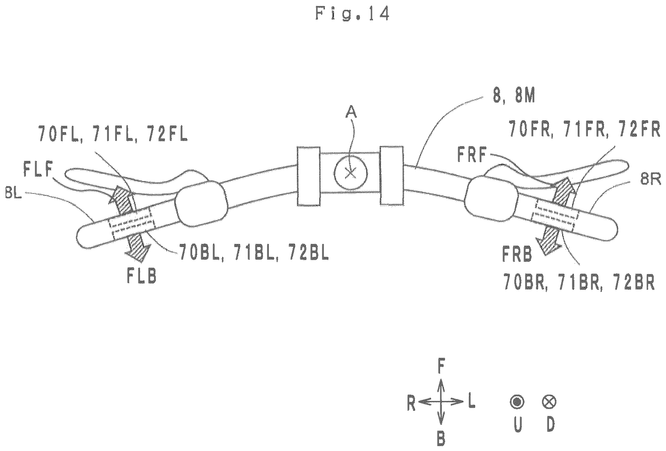

FIG. 14 is a view illustrating a first arrangement example of the tactile stimulation actuators 70FL, 70BL, 70FR, 70BR, 71FL, 71BL, 71FR, 71BR, 72FL, 72BL, 72FR and 72BR. The tactile stimulation actuators 70FL, 71FL and 72FL are disposed in front of the left end part of the bar-handle-main-body 8M in the frontward direction F. The tactile stimulation actuators 70BL, 71BL and 72BL are disposed behind the left end part of the bar-handle-main-body 8M in the backward direction B. The tactile stimulation actuators 70FR, 71FR and 72FR are disposed in front of the right end part of the bar-handle-main-body 8M in the frontward direction F. The tactile stimulation actuators 70BR, 71BR and 72BR are disposed behind the right end part of the bar-handle-main-body 8M in the backward direction B.

Note that the arrangement of the tactile stimulation actuators 70FL, 70BL, 70FR, 70BR, 71FL, 71BL, 71FR, 71BR, 72FL, 72BL, 72FR and 72BR is not limited to the first arrangement example. It suffices that at least one tactile stimulation actuator among the tactile stimulation actuator 70FL, the tactile stimulation actuator 70BL, the tactile stimulation actuator 70FR and the tactile stimulation actuator 70BR is provided. Further, it suffices that at least one tactile stimulation actuator among the tactile stimulation actuator 71FL, the tactile stimulation actuator 71BL, the tactile stimulation actuator 71FR and the tactile stimulation actuator 71BR is provided. It suffices that at least one tactile stimulation actuator among the tactile stimulation actuator 72FL, the tactile stimulation actuator 72BL, the tactile stimulation actuator 72FR and the tactile stimulation actuator 72BR is provided. In this case, pressure is imparted to only either one of the left hand HL and the right hand HR of the rider.

### [Second arrangement example]

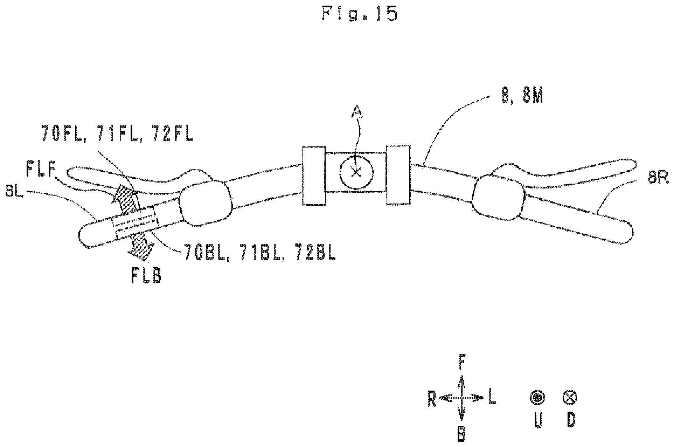

FIG. 15 is a view illustrating a second arrangement example of the tactile stimulation actuators 70FL, 70BL, 71FL, 71BL, 72FL and 72BL. The tactile stimulation actuators 70FL, 71FL and 72FL are disposed in front of the left end part of the bar-handle-main-body 8M in the frontward direction F. The tactile stimulation actuators 70BL, 71BL and 72BL are disposed behind the left end part of the bar-handle-main-body 8M in the backward direction B. The tactile stimulation actuators 70FR, 71FR and 72FR and the tactile stimulation actuators 70BR, 71BR and 72BR are not disposed at the right grip 8R. In this case, the pressures FLF and FLB are imparted to the left hand HL of the rider, and a pressure is not imparted to the right hand HR of the rider.

Note that, the tactile stimulation actuators 70FR, 71FR and 72FR (not illustrated) may be disposed in front of the right end part of the bar-handle-main-body 8M in the frontward direction F. The tactile stimulation actuators 70BR, 71BR and 72BR (not illustrated) may be disposed behind the right end part of the bar-handle-main-body 8M in the backward direction B. The tactile stimulation actuators 70FL, 71FL and 72FL and the tactile stimulation actuators 70BL, 71BL and 72BL need not be disposed at the left grip 8L. In this case, the pressures FRF and FRB are imparted to the right hand HR of the rider, and a pressure is not imparted to the left hand HL of the rider.

### [Third arrangement example]

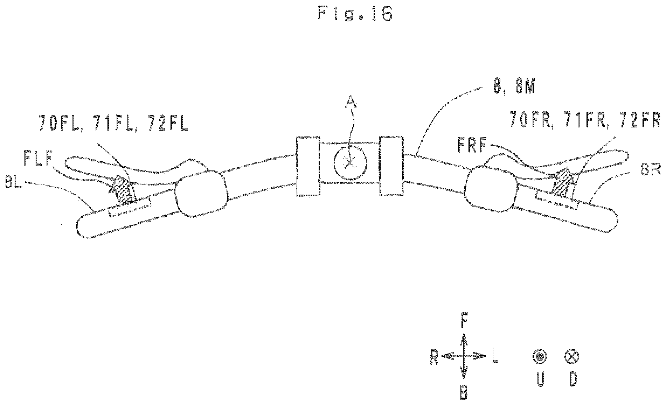

FIG. 16 is a view illustrating a third arrangement example of the tactile stimulation actuators 70FL, 71FL, 72FL, 70FR, 71FR and 72FR. The tactile stimulation actuators 70FL, 71FL and 72FL are disposed in front of the left end part of the bar-handle-main-body 8M in the frontward direction F. The tactile stimulation actuators 70FR, 71FR and 72FR are disposed in front of the right end part of the bar-handle-main-body 8M in the frontward direction F. The tactile stimulation actuators 70BL, 71BL and 72BL are not disposed at the left grip 8L. The tactile stimulation actuators 70BR, 71BR and 72BR are not disposed at the right grip 8R. In this case, the pressure FLF is imparted to the left hand HL of the rider, and the pressure FRF is imparted to the right hand HR of the rider. Further, the pressure FLB is not imparted to the left hand HL of the rider, and the pressure FRB is not imparted to the right hand HR of the rider.

Note that the tactile stimulation actuators 70BL, 71BL and 72BL (not illustrated) may be disposed behind the left end part of the bar-handle-main-body 8M in the backward direction B. The tactile stimulation actuators 70BR, 71BR and 72BR (not illustrated) may be disposed behind the right end part of the bar-handle-main-body 8M in the backward direction B. The tactile stimulation actuators 70FL, 71FL and 72FL need not be disposed at the left grip 8L. The tactile stimulation actuators 70FR, 71FR and 72FR need not be disposed at the right grip 8R. In this case, the pressure FLB is imparted to the left hand HL of the rider, and the pressure FRB is imparted to the right hand HR of the rider. Further, the pressure FLF is not imparted to the left hand HL of the rider, and the pressure FRF is not imparted to the right hand HR of the rider.

### [Fourth arrangement example]

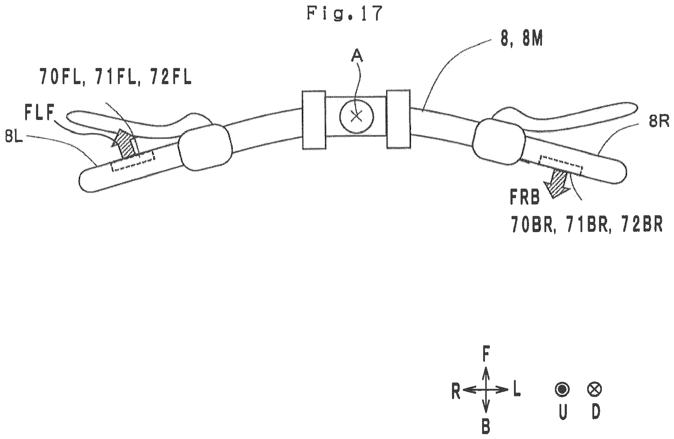

FIG. 17 is a view illustrating a fourth arrangement example of the tactile stimulation actuators 70FL, 71FL, 72FL, 70BR, 71BR and 72BR. The tactile stimulation actuators 70FL, 71FL and 72FL are disposed in front of the left end part of the bar-handle-main-body 8M in the frontward direction F. The tactile stimulation actuators 70BR, 71BR and 72BR are disposed behind the right end part of the bar-handle-main-body 8M in the backward direction B. The tactile stimulation actuators 70BL, 71BL and 72BL are not disposed at the left grip 8L. The tactile stimulation actuators 70FR, 71FR and 72FR are not disposed at the right grip 8R. In this case, the pressure FLF is imparted to the left hand HL of the rider, and the pressure FRB is imparted to the right hand HR of the rider. Further, the pressure FLB is not imparted to the left hand HL of the rider, and the pressure FRF is not imparted to the right hand HR of the rider.

Note that the tactile stimulation actuators 70BL, 71BL and 72BL (not illustrated) may be disposed behind the left end part of the bar-handle-main-body 8M in the backward direction B. The tactile stimulation actuators 70FR, 71FR and 72FR (not illustrated) may be disposed in front of the right end part of the bar-handle-main-body 8M in the frontward direction F. The tactile stimulation actuators 70FL, 71FL and 72FL need not be disposed at the left grip 8L. The tactile stimulation actuators 70BR, 71BR and 72BR need not be disposed at the right grip 8R. In this case, the pressure FLB is imparted to the left hand HL of the rider, and the pressure FRF is imparted to the right hand HR of the rider. Further, the pressure FLF is not imparted to the left hand HL of the rider, and the pressure FRB is not imparted to the right hand HR of the rider.

Note that, any one tactile stimulation actuator among the tactile stimulation actuators 70FL, 70BL, 70FR and 70BR may be provided. Further, any one tactile stimulation actuator among the tactile stimulation actuators 71FL, 71BL, 71FR and 71BR. may be provided. Furthermore, any one tactile stimulation actuator among the tactile stimulation actuators 72FL, 72BL, 72FR and 72BR may be provided.

### (Pattern of pressures)

A pattern of the pressures FLF, FLB, FRF and FRB is not limited to the pattern illustrated in FIG. 5. Hereunder, modifications of the pattern of the pressures FLF, FLB, FRF and FRB are described with reference to the drawings.

### [First pattern]

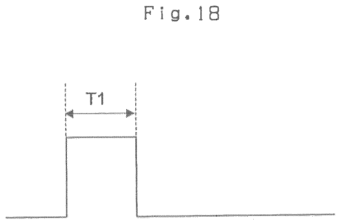

FIG. 18 is a graph illustrating the relation between the size of the pressures FLF, FLB, FRF and FRB and time according to a first pattern. The abscissa axis represents time. The ordinate axis represents the size of the pressure. In the graph in FIG. 18, the pressures FLF, FLB, FRF and FRB of a constant size are generated throughout a time period T1. That is, the first pattern includes a single rectangular wave. The time period T1 is set to a length that allows the rider to feel the pressures. Thus, by the first pattern including a single rectangular wave, it is easy for the rider to notice the pressures FLF, FLB, FRF and FRB.

### [Second pattern]

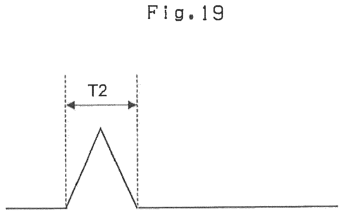

FIG. 19 is a graph illustrating the relation between the size of the pressures FLF, FLB, FRF and FRB and time according to a second pattern. The abscissa axis represents time. The ordinate axis represents the size of the pressure. In the graph in FIG. 19, during a time period T2, the size of the pressures FLF, FLB, FRF and FRB increases linearly from a reference value (for example, 0), and thereafter the size of the pressures FLF, FLB, FRF and FRB decreases linearly to the reference value (for example, 0). That is, the second pattern includes a single wave having a triangular shape (hereunder, referred to as "triangular wave"). The time period T2 is set to a length that allows the rider to feel the pressures. Thus, by the second pattern including a single triangular wave, it is easy for the rider to notice the pressures FLF, FLB, FRF and FRB.

Note that, after the size of the pressures FLF, FLB, FRF and FRB increases from the reference value (for example, 0), a plurality of peaks may exist until the size of the pressures FLF, FLB, FRF and FRB decreases to the reference value (for example, 0).

Note that, the second pattern may include a plurality of triangular waves, similarly to the pattern in FIG. 5.

### [Third pattern]

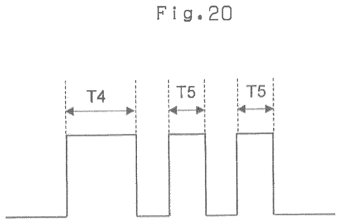

FIG. 20 is a graph illustrating the relation between the size of the pressures FLF, FLB, FRF and FRB and time according to a third pattern. The abscissa axis represents time. The ordinate axis represents the size of the pressure. The third pattern includes a plurality of (three) rectangular waves. However, the length of the first rectangular wave is a time period T4. The length of the second rectangular wave and the third rectangular wave is a time period T5. The time period T4 is longer than the time period T5. Note that, the third pattern may include two rectangular waves, or may include four or more rectangular waves.

### [Fourth pattern]

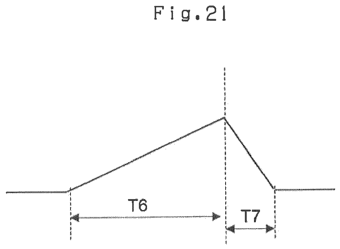

FIG. 21 is a graph illustrating the relation between the size of the pressures FLF, FLB, FRF and FRB and time according to a fourth pattern. The abscissa axis represents time. The ordinate axis represents the size of the pressure. In the graph in FIG. 21, during a time period T6, the size of the pressures FLF, FLB, FRF and FRB increases linearly from a reference value (for example, 0). Thereafter, during a time period T7, the size of the pressures FLF, FLB, FRF and FRB decreases linearly to the reference value (for example, 0). The time period T6 is longer than the time period T7. Thus, the fourth pattern includes a single wave having a triangular shape (hereunder, referred to as "triangular wave"). However, the triangular wave of the fourth pattern has an asymmetrical waveform with respect to the peak.

### [Fifth pattern]

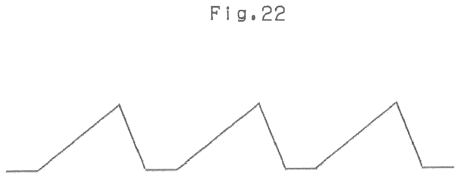

FIG. 22 is a graph illustrating the relation between the size of the pressures FLF, FLB, FRF and FRB and time according to a fifth pattern. The abscissa axis represents time. The ordinate axis represents the size of the pressure. The fifth pattern includes a plurality of the triangular waves of the fourth pattern. Note that the fourth pattern may include two triangular waves, or may include four or more rectangular waves.

### [Supplementary Description]

It suffices that the tactile-stimulation-information-communicating-apparatuses 100 and 100a to 100f impart the pressures FLF, FLB, FRF and FRB according to any pattern among the pattern illustrated in FIG. 5 and the first pattern to the fifth pattern to the left hand HL or the right hand HR of the rider. However, the tactile-stimulation-information-communicating-apparatuses 100 and 100a to 100f may select a pattern among the pattern illustrated in FIG. 5 and the first pattern to the fifth pattern based on the information to be communicated to the rider. That is, the tactile-stimulation-information-commumcating-apparatuses 100 and 100a to 100f may separately use the pattern illustrated in FIG. 5 and the first pattern to the fifth pattern according to the content of the information to be communicated to the rider.

Further, patterns of the pressures FLF, FLB, FRF and FRB are not limited to the pattern illustrated in FIG. 5 and the first pattern to the fifth pattern. The tactile-stimulation-information-communicating-apparatuses 100 and 100a to 100f may decide the size, time period and direction of the pressures FLF, FLB, FRF and FRB based on the information to be communicated to the rider.

In addition, a pattern of the pressures FLF, FLB, FRF and FRB may be a pattern in which the pattern illustrated in FIG. 5 or one of the first pattern to the fifth pattern is executed only one time, or a pattern of the pressures FLF, FLB, FRF and FRB may be a pattern in which the pattern illustrated in FIG. 5 or one of the first pattern to the fifth pattern is repeatedly executed multiple times.

### (Other Embodiments)

The embodiments and modifications described and/or illustrated in this specification are described in order to facilitate understanding of the present disclosure, and are not intended to limit the concept of the present disclosure. The above described embodiments and modifications may be changed or modified without departing from the gist thereof.

The gist includes equivalent elements, corrections, deletions, combinations (for example, combinations of features spanning over embodiments and modifications), improvements, and alterations that can be recognized by those skilled in the art based on the embodiments disclosed in the present specification. The limitations of the appended claims should be broadly interpreted based on the terms used in the appended claims, and the limitations should not be limited by the embodiments and modifications described in the present description or in the prosecution of the present application. The embodiments and modifications should be construed as non-exclusive. For example, the terms "preferably" and "may" are non-exclusive in the present specification, meaning "preferable, but not limited to this" and "may be, but not limited to this."

Note that, the information generating portion 120 outputs the determination result RE regarding whether or not the straddled vehicle 1 or 1a is approaching either one of the two edges in the traffic lane width direction of the traffic lane, to the tactile-stimulation-information-communicating-apparatus 100. That is, the information to be communicated to the rider is that the straddled vehicle 1 or 1a is approaching either one of the two edges in the traffic lane width direction of the traffic lane. However, the information to be communicated to the rider is not limited to information to the effect that the straddled vehicle 1 or 1a is approaching either one of the two edges in the traffic lane width direction of the traffic lane. The information to be communicated to the rider is information regarding a change in the traveling environment of the straddled vehicle 1 or 1a, and information regarding a change in the state of the rider. The term "information to be communicated to the rider" refers to, for example, information regarding detection of an obstacle, operation of an emergency automatic brake, notification of the travelling direction by a navigation system, notification of a decrease in fuel, notification of the vehicle speed, notification of the timing of a gear change, notification of the number of revolutions of an engine, notification of the water temperature of an engine, notification of the oil temperature of an engine, and information to the effect that the rider forget to turn off a flasher or the like.

Further, the information to be communicated to the rider may be information that a vehicle is approaching the straddled vehicle 1 from the backward direction B. For example, in a case where a vehicle is approaching the straddled vehicle 1 from a straddled-vehicle (1) left-backward direction LB, the tactile stimulation actuator 70 causes the left grip 8L to impart the pressure FLB in the backward direction B to the left hand HL. For example, in a case where a vehicle is approaching the straddled vehicle 1 from a straddled-vehicle (1) right-backward direction RB, the tactile stimulation actuator 70 causes the right grip 8R to impart the pressure FRB in the backward direction B to the right hand HR. However, the manner in which pressures are imparted is not limited to the above examples. Further, in the straddled vehicle 1a also, similarly to the straddled vehicle 1, a fact that a vehicle is approaching from the backward direction B may be communicated to the rider.

Further, the information generating portion 120 includes the photographing portion 110. However, the information generating portion 120 may also include a component other than the photographing portion 110. Examples of a component other than the photographing portion 110 that may be mentioned include a sensor that measures a distance to an obstacle, GPS (Global Positioning System), a fuel gauge, a vehicle speed system, a gear-change detector, an engine speed detector, a water temperature gauge, an oil temperature gauge, an acceleration sensor, a throttle sensor, a brake pressure sensor, and a steering torque sensor. The photographing portion 110 and component(s) other than the photographing portion 110 acquire information that serves as the basis of the information to be communicated to the rider. The photographing portion 110 and component(s) other than the photographing portion 110 are referred to generically as "basic information acquisition portion". The notification determining portion 112 outputs the determination result RE that is the information to be communicated to the rider to the tactile-stimulation-actuator-control-portion 62 based on information that is outputted from a basic information acquisition portion (the photographing portion 110 or a component other than the photographing portion 110).

The tactile-stimulation-actuator-control-portion 62 controls the tactile stimulation actuators 70, 70FL, 70BL, 70FR, 70BR, 71FL, 71BL, 71FR, 71BR, 72FL, 72BL, 72FR and 72BR based on the information outputted from the notification determining portion 112. Therefore, the tactile-stimulation-actuator-control-portion 62 generates a control signal or control data for controlling the tactile stimulation actuators 70, 70FL, 70BL, 70FR, 70BR, 71FL, 71BL, 71FR, 71BR, 72FL, 72BL, 72FR and 72BR based on the information outputted from the notification determining portion 112. The control signal or control data may include, for example, information that instructs the relevant tactile stimulation actuator(s) to impart a pressure. Further, the control signal or control data may include information indicating the size of a pressure, the direction of a pressure, or a temporal variation pattern of pressure. The term "temporal variation pattern of pressure" refers to a pattern with respect to the relation between a time period and a size of a pressure that the tactile stimulation actuators 70, 70FL, 70FR, 71FL, 71FR, 72FL and 72FR impart to the left hand HL or the right hand HR of the rider.

Note that, a pressure acts in a direction perpendicular to a face at which a force acts. The tactile stimulation actuators 70, 70FL, 70BL, 70FR, 70BR, 71FL, 71BL, 71FR, 71BR, 72FL, 72BL, 72FR and 72BR can impart a pressure in a direction perpendicular to a contact face between the left grip 8L or the right grip 8R and the left hand HL or the right hand HR of the rider. The term "perpendicular" includes a case where an angle formed by the force and the contact face is strictly perpendicular and a case where an angle formed by the force and the contact face deviates from perpendicularity to an extent to which the rider can feel the pressure.

That is, the tactile stimulation actuators 70, 70FL, 70FR, 71FL, 71FR, 72FL and 72FR generate a pressure in a direction that is perpendicular to the front face of the left grip 8L or the front face of the right grip 8R and is a direction away from the front face of the left grip 8L or the front face of the right grip 8R. Further, the tactile stimulation actuators 70, 70BL, 70BR, 71BL, 71BR, 72BL and 72BR generate a force that presses in a direction that is perpendicular to the rear face of the left grip 8L or the rear face of the right grip 8R and is a direction away from the rear face of the left grip 8L or the rear face of the right grip 8R. The terms "front face of the left grip 8L" and "front face of the right grip 8R" refer to the front half portion within the surface of the left grip 8L and the surface of the right grip 8R, respectively. The terms "front face of the left grip 8L" and "rear face of the right grip 8R" refer to the rear half portion within the surface of the left grip 8L and the surface of the right grip 8R, respectively. Thus, the left grip 8L or the right grip 8R can impart a pressure in the frontward direction F or the backward direction B to the left hand HL or the right hand HR of the rider. Note that, the term "perpendicular" includes a case where an angle formed between the pressure and the front face of the left grip 8L and an angle formed between the pressure and the front face of the right grip 8R are strictly perpendicular, and a case where an angle formed between the pressure and the front face of the left grip 8L and an angle formed between the pressure and the front face of the right grip 8R deviate from perpendicularity to an extent to which the rider can feel the pressure in the frontward direction F. Similarly, the term "perpendicular" includes a case where an angle formed between the pressure and the rear face of the left grip 8L and an angle formed between the pressure and the rear face of the right grip 8R are strictly perpendicular, and a case where an angle formed between the pressure and the rear face of the left grip 8L and an angle formed between the pressure and the rear face of the right grip 8R deviate from perpendicularity to an extent to which the rider can feel the pressure in the backward direction B. The allowable range of a deviation is, for example, a range of not more than 45° in the upward direction U or the downward direction D with respect to a direction perpendicular to the front face or the rear face.

The tactile stimulation actuators 70, 70FL, 70BL, 70FR, 70BR, 71FL, 71BL, 71FR, 71BR, 72FL, 72BL, 72FR and 72BR may impart the pressures FLF, FLB, FRF and FRB that change with time to the left hand HL or the right hand HR of the rider. For example, the tactile-stimulation-actuator-control-portion 62 can control a temporal variation pattern of pressure by controlling the tactile stimulation actuators 70, 70FL, 70BL, 70FR, 70BR, 71FL, 71BL, 71FR, 71BR, 72FL, 72BL, 72FR and 72BR. By this means, the variety of information to be communicated to the rider can be increased.

A temporal variation pattern of pressure may be, for example, a temporal variation pattern of pressure that is not cyclical. Examples of a temporal variation pattern of pressure that is not cyclical that may be mentioned include an independent single rectangular wave, an independent single triangular wave, and a pressure imparted continuously for a time period equal to or greater than a time period whereby it is possible for the rider to recognize the pressure when continuously pressed. A temporal variation pattern of pressure which includes two or more consecutive rectangular waves of different widths or triangular waves of different widths, and a temporal variation pattern of pressure in which a time period for which the size of a pressure increases from a reference value until reaching a peak and a time period for which the size of the pressure decreases from the peak to the reference value are different and the like are also included in the examples of a temporal variation pattern of pressure that is not cyclical.

A temporal variation pattern of pressure may be, for example, a temporal variation pattern of pressure that is cyclical. The tactile-stimulation-actuator-control-portion 62 may control the tactile stimulation actuators 70, 70FL, 70BL, 70FR, 70BR, 71FL, 71BL, 71FR, 71BR, 72FL, 72BL, 72FR and 72BR such that a temporal variation pattern of pressure that is not cyclical is cyclically repeated.

Note that, as illustrated in FIG. 13, the tactile stimulation actuators 72FL, 72BL, 72FR and 72BR are not limited to a structure that includes the cam 144FL. The tactile stimulation actuators 72FL, 72BL, 72FR and 72BR may include a rack and pinion structure. In this case, a pinion gear is provided at the tip of the output shaft 140aFL of the actuator main body 140FL. A rack is engaged with the pinion gear. When the output shaft 140aFL rotates, the rack moves linearly in the up-down direction UD or the left-right direction LR. By this means, the rack moves into a region between the bar-handle-main-body 8M and the left hand HL or the right hand HR of the rider from outside the region between the bar-handle-main-body 8M and the left hand HL or the right hand HR of the rider. As a result, a pressure is imparted to the left hand HL or the right hand HR of the rider.

Note that, in the tactile-stimulation-information-communicating-apparatus 100, a rotational angle at which the tactile stimulation actuator 70 rotates the bar handle 8 may be less than a rotational angle at which the rider rotates the bar handle 8 when the straddled vehicle 1 turns.

In the tactile-stimulation-information-communicating-apparatus 100, the torque Tr of the tactile stimulation actuator 70 is transmitted to the steerable wheel 4. However, the torque Tr of the tactile stimulation actuator 70 may be transmitted to the bar handle 8 and not transmitted to the steerable wheel 4.

The bar handle 8 rotates around the steering axis A that extends in the up-down direction UD. The steering axis A may incline with respect to the up-down direction UD.

The vehicle body frame 2 is a member that receives stress applied to the straddled vehicle 1 or 1a during traveling. The vehicle body frame 2 includes, for example, a monocoque (stressed-skin structure) structure, a semi-monocoque structure, or a structure in which a vehicle component also serves as a member that receives stress. For example, a component such as an engine or an air cleaner may be a part of the vehicle body frame 2.

The straddled vehicle 1 or 1a can also be applied with respect to any straddled vehicle other than a motorcycle. The straddled vehicle 1 or 1a may be, for example, a motor tricycle, a leaning multi-wheel (LMW) vehicle, a bicycle, an ATV, a snowmobile or a personal water craft. Further, the steerable wheel may be two wheels that are aligned in the left-right direction LR. Note that the steerable wheel is not limited to a wheel that rotate around a wheel axle, and includes rudders in general that are steered with a bar handle. Further, in the straddled vehicle 1 or 1a, when turning in the leftward direction L or the rightward direction R, the vehicle body frame 2 may lean in the leftward direction L or the rightward direction R or need not lean in the leftward direction L or the rightward direction R. Note that, the straddled vehicle 1 or 1a is a vehicle that a rider mounts in a state in which the rider straddles a saddle.

In the tactile-stimulation-information-communicating-apparatus 100b illustrated in FIG. 8, the size of a voltage signal applied to the piezoelectric element 91FL and the size of a voltage signal applied to the piezoelectric element 91BL may be the same or may be different. The size of a voltage signal applied to the piezoelectric element 91FR (not illustrated) and the size of a voltage signal applied to the piezoelectric element 91BR (not illustrated) may be the same or may be different. Further, in the tactile-stimulation-information-communicating-apparatus 100e illustrated in FIG. 12, an air amount that is injected into the balloon 136FL and an air amount that is injected into the balloon 136BL may be the same or may be different. The air amount that is injected into the balloon 136FR (not illustrated) and an air amount that is injected into the balloon 136BR (not illustrated) may be the same or may be different.

Note that, in the straddled vehicle 1a, the actuator 170 is not an essential component.

As illustrated in FIG. 3, the straddled vehicle 1 may further include vibrators 200L and 200R that impart a vibration whose vibration direction cannot be recognized to the left hand HL or to the right hand HR of the rider by means of the left grip 8L or the right grip 8R. Similarly, the straddled vehicle 1a may further include the vibrators 200L and 200R. However, the vibrators 200L and 200R are not essential components.

Note that, a pressure in the frontward direction F or the backward direction B may be a vibration that the rider can recognize when vibrating in the front-back direction. In this case, a vibrator may be used as a tactile stimulation actuator. Therefore, preferably the amplitude in the front-back direction of the vibrator is greater than the amplitude in the left-right direction of the vibrator and the amplitude in the up-down direction of the vibrator. However, this fact does not hinder the amplitude in the front-back direction of the vibrator from being smaller than the amplitude in the left-right direction of the vibrator or the amplitude in the up-down direction of the vibrator. The reason is that, even when the amplitude in the front-back direction of the vibrator is smaller than the amplitude in the left-right direction of the vibrator or the amplitude in the up-down direction of the vibrator, depending on the manner in which a vibration that the vibrator generates is communicated, there are cases where a rider can recognize that a vibrator is vibrating in the front-back direction.

Note that, the vibrator includes a vibration motor. In a vibration motor, an oscillator is attached to a rotating shaft. Vibrations are generated by rotation of the rotating shaft. In general, such kind of vibration motor generates vibrations that the rider cannot recognize when the vibration motor vibrates in the front-back direction (a specific direction). However, it suffices to fix such kind of vibrator to the bar-handle-main-body 8M or the like such that, for example, vibrations in the front-back direction FB are easily transmitted to the left hand HL or the right hand HR of the rider and it is difficult for vibrations in the left-right direction LR and vibrations in the up-down direction UD to be transmitted to the left hand HL or the right hand HR of the rider. Specifically, the vibrator is rigidly fixed to the bar-handle-main-body 8M or the like such that the vibrator cannot be displaced by a large amount in the front-back direction FB, and is fixed to the bar-handle-main-body 8M or the like such that the vibrator can be displaced by a large amount in the left-right direction LR and the up-down direction UD. By this means, vibrations in the front-back direction FB are easily transmitted, and vibrations in the left-right direction LR and vibrations in the up-down direction UD are easily absorbed.

In a case where the vibrator includes a vibration motor, vibrations in the front-back direction FB may be made greater than vibrations in the left-right direction LR and vibrations in the up-down direction UD by making the angular velocity of the vibration motor nonuniform.

Instead of a vibration motor, the vibrator may include a piezoelectric element that vibrates in one direction.

Note that the tactile stimulation actuators 70FL, 70BL, 70FR, 70BR, 71FL, 71BL, 71FR, 71BR, 72FL, 72BL, 72FR and 72BR may be linear solenoid actuators.

The straddled vehicle 1 or 1a may include driving support technology such as autonomous driving technology or an emergency automatic brake in addition to the tactile-stimulation-information-communicating-apparatus 100 or 100a. The tactile-stimulation-information-communicating-apparatus 100 or 100a may communicate information relating to the driving support technology to the rider, or may communicate information that does not relate to the driving support technology to the rider.

Note that, in a similar manner to step S3 in FIG. 6, the notification determining portion 112 may determine whether or not the first straddled-vehicle-to-traffic-lane-edge-distance D1 is shorter than the rider notification distance D0. Further, in a similar manner to step S5 in FIG. 6, the notification determining portion 112 may determine whether or not the second straddled-vehicle-to-traffic-lane-edge-distance D2 is shorter than the rider notification distance D0.

### REFERENCE SIGNS LIST

1, 1a: Straddled vehicle
2: Vehicle body frame
2a: Main frame
2ad: Main-frame-lower-part
2au: Main-frame-upper-part
2b: Head pipe
3: Drive source
4: Steerable wheel
5: Driving wheel
6: Left shock absorber
7: Right shock absorber
8: Bar handle
8L: Left grip
8M: Bar-handle-main-body
8R: Right grip
9: Steering shaft
10: Swing arm
11: Seat
14: Bottom bridge
20: Transmission member
29: Steering mechanism
50: Top bridge
62: Tactile-stimulation-actuator-control-portion
70, 70FL, 70BL, 70FR, 70BR, 71FL, 71BL, 71FR, 71BR, 72FL, 72BL, 72FR,
72BR: Tactile stimulation actuator
71: Actuator main body
71a: Output shaft
72: Reduction gear
85: Attachment portion
91FL, 91BL, 91FR, 91BR: Piezoelectric element
100, 100a to 100f: Tactile-stimulation-information-communicating-apparatus
110: Photographing portion
112: Notification determining portion
120: Information generating portion
130: Pump
132FL, 132BL: Valve
134FL, 134BL: Air pipe
136FL, 136BL, 136FR, 136BR: Balloon
140FL: Actuator main body
140aFL: Output shaft
142FL, 144cFL: Gear
144FL, 144BL, 144FR, 144BR: Cam
144aFL: Cam main body
144bFL: Shaft
170: Actuator
200L, 200R: Vibrator
A: Steering axis
Ax: Roll axis

## Claims

1. A straddled vehicle, comprising:
a vehicle body frame, a seat of (A), a bar handle of (B), a steerable wheel of (C), and a tactile stimulation actuator of (D), wherein:
(A) the seat is supported by the vehicle body frame, and is straddled by a rider;
(B) the bar handle is supported by the vehicle body frame such that the bar handle is allowed to rotate about a steering axis extending in an up-down direction,
the bar handle includes a left grip and a right grip,
the left grip is located further leftward than a center in a vehicle-body-frame left-right direction, and is held by a left hand of the rider, and
the right grip is located further rightward than the center in the vehicle-body-frame left-right direction, and is held by a right hand of the rider;
(C) the steerable wheel is supported by the vehicle body frame such that the steerable wheel is allowed to rotate around a wheel axle,
the steerable wheel is steered leftward by the rider rotating the bar handle counterclockwise as viewed in downward direction, and
the steerable wheel is steered rightward by the rider rotating the bar handle clockwise as viewed in downward direction; and
(D) the tactile stimulation actuator communicates information to the rider by imparting a frontward or backward pressure as a tactile stimulation to the left hand or the right hand of the rider.

2. The straddled vehicle according to claim 1, wherein:
the tactile stimulation actuator imparts the pressure to the right hand of the rider and does not impart the pressure to the left hand of the rider, or imparts the pressure to the left hand of the rider and does not impart the pressure to the right hand of the rider.

3. The straddled vehicle according to claim 1, wherein:
the tactile stimulation actuator imparts the pressure to the right hand of the rider and imparts the pressure to the left hand of the rider.

4. The straddled vehicle according to claim 3, wherein:
the tactile stimulation actuator imparts the pressure in a frontward direction to the right hand of the rider and imparts the pressure in a frontward direction to the left hand of the rider, or imparts the pressure in a backward direction to the right hand of the rider and imparts the pressure in a backward direction to the left hand of the rider.

5. The straddled vehicle according to claim 3, wherein:
the tactile stimulation actuator imparts the pressure in a frontward direction to the right hand of the rider and imparts the pressure in a backward direction to the left hand of the rider, or imparts the pressure in a backward direction to the right hand of the rider and imparts the pressure in a frontward direction to the left hand of the rider.

6. The straddled vehicle according to any one of claim 1 to claim 5, wherein:
the left grip or the right grip imparts the pressure in a frontward direction or a backward direction to the left hand or the right hand of the rider by the tactile stimulation actuator causing the left grip or the right grip to deform such that the left grip or the right grip protrudes frontward or backward.

7. The straddled vehicle according to claim 6, wherein:
the tactile stimulation actuator includes a piezoelectric element disposed at the left grip or the right grip, the piezoelectric element deforming such that a size of the piezoelectric element in a front-back direction changes, and
the tactile stimulation actuator causes the left grip or the right grip to deform such that the left grip or the right grip protrudes frontward or backward, by means of deformation of the piezoelectric element.

8. The straddled vehicle according to claim 6, wherein:
the tactile stimulation actuator includes a cam that is disposed at the left grip or the right grip, and a motor that causes the cam to rotate, and
the tactile stimulation actuator causes the left grip or the right grip to deform such that the left grip or the right grip protrudes frontward or backward, by rotation of the cam.

9. The straddled vehicle according to claim 6, wherein:
the tactile stimulation actuator includes a balloon that is disposed at the left grip or the right grip, and a pump that injects a fluid into the balloon, and
the tactile stimulation actuator causes the left grip or the right grip to deform such that the left grip or the right grip protrudes frontward or backward, by expansion of the balloon.

10. The straddled vehicle according to any one of claim 1 to claim 5, wherein:
the tactile stimulation actuator includes a motor that imparts to the bar handle a force that causes the bar handle to rotate about the steering axis, and
the tactile stimulation actuator imparts the pressure in a frontward direction or a backward direction to the left hand or the right hand of the rider by means of the left grip or the right grip, by causing the motor to rotate the bar handle.

11. The straddled vehicle according to any one of claim 1 to claim 10, wherein:
the straddled vehicle comprises a tactile-stimulation-information-communicating-apparatus that includes the tactile stimulation actuator, a tactile-stimulation-actuator-control-portion, and an information generating portion that acquires and generates information to be communicated to the rider, and
the tactile-stimulation-actuator-control-portion controls the tactile stimulation actuator such that the tactile stimulation actuator imparts the pressure in a frontward direction or a backward direction to the left hand or the right hand of the rider, based on information to be communicated to the rider that the information generating portion generates.

12. The straddled vehicle according to claim 11, wherein:
the straddled vehicle travels along a traffic lane;
a traffic lane width direction is a width direction of the traffic lane;
two edges in the traffic lane width direction of the traffic lane comprise a first edge and a second edge;
the information generating portion includes:
a notification determining portion that determines whether or not a first straddled-vehicle-to-traffic-lane-edge-distance between the straddled vehicle and the first edge or a second straddled-vehicle-to-traffic-lane-edge-distance between the straddled vehicle and the second edge is equal to or less than a rider notification distance, or whether or not the first straddled-vehicle-to-traffic-lane-edge-distance between the straddled vehicle and the first edge or the second straddled-vehicle-to-traffic-lane-edge-distance between the straddled vehicle and the second edge is shorter than a rider notification distance; and
in a case where the first straddled-vehicle-to-traffic-lane-edge-distance or the second straddled-vehicle-to-traffic-lane-edge-distance is equal to or less than a rider notification distance, or a case where the first straddled-vehicle-to-traffic-lane-edge-distance or the second straddled-vehicle-to-traffic-lane-edge-distance is shorter than a rider notification distance, the tactile stimulation actuator communicates information to an effect that the straddled vehicle is approaching either one of the two edges in the traffic lane width direction of the traffic lane to the rider by imparting the pressure in a frontward direction or a backward direction to the left hand or the right hand of the rider as a tactile stimulation.
